# EUROPÄISCHE PATENTSCHRIFT

(11) **EP 1 797 401 B1**
(45) Veröffentlichungstag und Bekanntmachung des Hinweises auf die Patenterteilung: **02.12.2020**
(21) Anmeldenummer: 05791443.4
(22) Anmeldetag: 02.10.2005
(51) Int. Cl.: G01F 1/56, A01J 5/01

(54) **VORRICHTUNG UND VERFAHREN ZUR MILCHMENGENMESSUNG, INSBESONDERE WÄHREND DES MELKVORGANGS**
DEVICE AND METHOD FOR MEASURING AMOUNTS OF MILK IN PARTICULAR DURING THE MILKING PROCESS
SYSTEME ET PROCEDE SERVANT A MESURER DES QUANTITES DE LAIT, EN PARTICULIER PENDANT LE PROCESSUS DE TRAITE

(30) Priorität: 05.10.2004 DE 102004048736
(43) Veröffentlichungstag der Anmeldung: 20.06.2007
(73) Patentinhaber: GEA WestfaliaSurge GmbH, 59199 Bönen (DE)
(72) Erfinder: SPRINGER, Andreas, 59269 Beckum (DE); KRONE, Otto, 49479 Ibbenbüren (DE)
(74) Vertreter: BSB Patentanwälte Schütte & Engelen Partnerschaft mbB
(86) Internationale Anmeldenummer: PCT/EP2005/010642
(87) Internationale Veröffentlichungsnummer: WO 2006/037590

(56) Entgegenhaltungen:
- EP-A- 0 498 080
- WO-A-99/45344
- DE-A1- 3 407 755
- DE-U1- 8 028 360
- GB-A- 2 342 167
- US-A- 3 757 773
- US-A- 4 019 385
- US-A- 5 245 946
- US-A- 5 503 026
- US-A1- 2004 123 671

## Beschreibung

Die Erfindung betrifft eine Vorrichtung und ein Verfahren zur Milchmengenmessung, insbesondere während des Melkvorgangs. Die Erfindung ist grundsätzlich zur Bestimmung der Gemelksmenge von Kühen, Schafen, Ziegen, Büffeln, Lamas, Kamelen, Dromedaren und sonstigen milchgebenden Säugetieren geeignet und wird im Folgenden beispielhaft mit Bezug auf das Melken von z.B. Kühen beschrieben.

Darüber hinaus kann die Erfindung auch in anderen Anwendungsgebieten eingesetzt werden, bei denen ein Messen von Mengen oder Massenströmen von Schaum enthaltenden bzw. bildenden Flüssigkeiten eine Rolle spielt, wie beispielsweise bei der Messung des Massenstromes von Bier, Limonade, Fruchtsäften oder anderen vergleichbaren Lebensmitteln, sowie anderen technischen Flüssigkeiten, die schäumen oder Schaum enthalten, wie z.B. Galvanisierflüssigkeiten.

Zur Steuerung des Melkprozesses ist die Kenntnis des aktuellen Milchflusses wichtig, um Parameter während des Melkens anzupassen, um z.B. den Übergang von der Stimulationsphase in die Hauptmelkphase, oder um den Abnahmezeitpunkt festzulegen. Eine hohe Genauigkeit ist dafür grundsätzlich nicht erforderlich, aber wünschenswert.

Die Milchmengenmessung ist von Bedeutung, um hieraus Rückschlüsse auf das Leistungsvermögen der einzelnen Kühe ziehen zu können. Günstig ist es, wenn die Genauigkeiten den Anforderungen der ICAR genügt, da dann eine regelmäßige separate Milchmengenmessung unterbleiben kann. Die Anforderungen für eine Zulassung durch ICAR (Internationales Komitee für Leistungsprüfungen in der Tierproduktion) hängen von der Tierart und weiteren Parametern ab, sind aber generell hoch. So beträgt der zulässige Messfehler bei Kühen und Gemelksmengen oberhalb von 10 kg maximal 2 Prozent bei einer maximalen Standardabweichung von 2,5 %. Für eine grundsätzliche Beurteilung des Leistungsvermögens oder für eine Steuerung des Melkprozesses ist eine derartige Genauigkeit in der Regel aber nicht erforderlich.

Ein Vorteil der Messung der Milchmenge oder des Milchmassenstromes ist, dass im Einzelfall über den Verlauf der Milchkurve beim Melken oder über die Milchmenge insgesamt auch ein Rückschluss auf den Gesundheitszustand des Tieres getroffen werden kann.

Ein Problem bei der Milchstrommessung besteht darin, dass Milch ein stark schäumendes Fluid ist. Die Schaumbildung beim Melken wird außerdem noch durch die gängigen Melktechniken begünstigt, da in der Regel in das Milchsammelstück und/oder die Zitzenbecher beim Melken periodisch oder kontinuierlich Luft eingelassen wird, um die ermolkene Milch abzutransportieren. Das pro Zeiteinheit eingelassene Luftvolumen kann variieren, beträgt aber in der Regel etwa 8 Liter Luft/Minute oder sogar mehr. Bei einem maximalen Milchfluss bei z.B. Kühen von etwa 10 oder 12 Liter Milch pro Minute in der Hauptmelkphase stellt der abzutransportierende Luftanteil grob gerechnet also wenigstens etwa 25 %, insbesondere wenigstens 40 % oder sogar 50 % des Volumenstroms von ermolkener Milch und eingelassener Luft dar. Und dieser ganz erhebliche Anteil liegt schon während der Phase des größten Milchflusses vor. Zum Ende des Melkens steigt der Anteil an abzutransportierender Luft aufgrund des nachlassenden Milchflusses dementsprechend noch weiter an. Außerdem kommt noch der Luftanteil hinzu, der am Melkbecher durch Undichtigkeiten zwischen Zitzengummi und Zitze bedingt eintritt. Dieser Anteil kann ebenfalls grob mit z.B. 10 Liter Luft pro Minute abgeschätzt werden. Der erhebliche Luftanteil des abzutransportierenden Luft- und Fluidgemisches kann deshalb nicht nur zu einzelnen Schaumbläschen, sondern zu einer erheblichen Schaumbildung führen, was die Messung des Milchstroms im Durchfluss bedeutend erschwert.

Da durch den Schaumanteil bedingt nicht einfach von einem Volumen auf die Masse geschlossen werden kann, ist die Genauigkeit von Milchmengenmessverfahren über ein Volumenmessverfahren oft eingeschränkt. Sowohl der Luftanteil im Fluid als auch die Blasengröße des Schaums sind nicht immer gleich, sondern sind von einer Vielzahl von Faktoren abhängig. Solche Faktoren sind beispielsweise die Milchtemperatur, die Milchdurchflussmenge, die Lage und Führung der Milchschläuche, die Art des Melkzeuges, der Zitzengummityp, der Melkschlauchdurchmesser, der Melkanlagentyp, die Vakuumhöhe und die Pulsfrequenz beim Melken, Leckluft bzw. Lufteinbrüche, die aktuelle Eutergesundheit, tierindividuelle Unterschiede bei den einzelnen Kühen aufgrund z.B. des Laktationsstandes oder der Kuhrasse, sowie aufgrund von Unterschieden bei der Art und der Menge der Fütterung etc..

Ein weiteres Problem beim Messen des Milchmengenstroms wird durch den periodischen Milchfluss hervorgerufen. Im Unterschied zur Messung des Mengenstroms bei vielen anderen Anwendungen, wird beim Melken die Milch periodisch abgemolken. Der Pulsraum und somit auch der Zitzenraum des Melkbechers wird einem periodischen Vakuum ausgesetzt, so dass der Milchfluss etwa im Pulsationstakt aus der Zitze austritt. Die Pulsfrequenz liegt typischerweise zwischen etwa 30 und 90 bei z.B. 60 Zyklen pro Minute. Bei vier Zitzen und Gleichtakt aller Zitzen ergibt das einen Milchstrom mit etwa 60 Milchstromimpulsen pro Minute. Bei unterschiedlicher Ansteuerung der Euterhälften oder der vier Zitzen z.B. einer Kuh kann der hochfrequente Anteil des Milchstroms auf bis zu etwa 240 Takte pro Minute bei einer 60iger Pulsfrequenz ansteigen. Oftmals wird die Milch propfenweise durch die Milchschläuche transportiert, so dass kurze Phasen mit maximalem mit kurzen Phasen mit minimalem Milchfluss abwechseln. Eine Bestimmung des aktuellen Milchflusses ist unter diesen Bedingungen schwierig.

Aufgrund solcher Einflüsse erweist sich die Messung eines Milchstromes als schwierig, da die Art und Zusammensetzung der Schaumphase einerseits, anderseits aber auch die Zusammensetzung und Beschaffenheit der flüssigen Phase innerhalb eines Melkvorgangs sowie von Melkvorgang zu Melkvorgang Schwankungen unterworfen sind. So kann sich z.B. die elektrische Leitfähigkeit des Fluids und der Anteil der Schaumphase ständig ändern, da sich z.B. der Fettanteil während des Melkens ändert, was zu Schwankungen hinsichtlich der elektrischen Leitfähigkeit und auch der optischen Eigenschaften der Milch führt. Auf der Messung solcher Parameter beruhende Messverfahren können somit nicht unerheblichen Ungenauigkeiten unterworfen sein.

Aus der DE 30 20 161 C2 ist eine Vorrichtung zur Milchmengenmessung bekannt geworden, bei dem Milch in einer Kammer periodisch angestaut wird, bis diese gefüllt ist, um dann den Inhalt der Kammer wieder abzulassen. Über die Zeitdauer zur Füllung und das in der Kammer enthaltene Volumen kann die Milchmenge insgesamt aufsummiert und der aktuelle Milchfluss abgeschätzt werden. Die erzielbare Genauigkeit solcher Messgeräte ist hoch. Prinzipbedingt erlauben periodisch arbeitende Messverfahren aber insbesondere bei kleinen Milchflüssen keine genaue Bestimmung des aktuellen Milchflusses. Die genaue Kenntnis des aktuellen Milchflusses ist aber zu Beginn des Melkprozesses und insbesondere auch am Ende des Melkens hilfreich, um die Prozessparameter anzupassen, und um den geeigneten Abnahmezeitpunkt zu bestimmen. Eine Messung im Durchfluss kann eine bessere Steuerung des Abnahmevorganges erlauben, da bei kontinuierlicher Messung der geeignete Abschaltpunkt entsprechend frühzeitig erkannt werden kann.

Aus der EP 0 536 080 A2 ist eine Milchstrommessung im Durchfluss bekannt, bei der Milch durch Strömungskanäle geleitet wird und die Transmission eines infraroten Lichtstrahls durch die Milch gemessen und ausgewertet wird. Aus der momentanen Dämpfung bzw. Schwächung des infraroten Lichtstrahls durch den von Milch durchflossenen Kanal wird auf den momentanen Massenstrom der Milch durch diesen Kanal geschlossen. Ein Nachteil bei der optischen Vermessung ist z.B., dass an kleinen und größeren Schaumbläschen und Schaumblasen der zur Messung verwendete Lichtstrahl gestreut werden kann, so dass, wenn ein Schaumanteil vorhanden ist, bei einer Transmissions- oder auch bei einer Reflexionsmessung zu wenig Licht gemessen werden kann, wodurch Messverfälschungen hervorgerufen werden können.

Aus der DE 37 37 607 A1 ist ein weiteres Verfahren und eine Vorrichtung zur Messung des Milchstromes im Durchfluss bekannt. Eine Vielzahl übereinander angeordneter Elektroden ist vorgesehen, um zunächst den elektrischen Widerstand bzw. die elektrische Leitfähigkeit des Flüssigkeits- und Luftgemisches auf den jeweiligen Höhenniveaus mit Hilfe der Elektroden zu bestimmen. Im Bodenbereich wird ein Referenzleitwert der aktuell vorbeifließenden Flüssigkeit gemessen. Aus den jeweiligen Höhenwerten wird mittels des Referenzleitwertes das stufenförmige Höhenprofil des spezifischen Widerstands berechnet. Aus Kalibriermessungen ist bei bekannten Widerstandsprofilen die Strömungsgeschwindigkeit der abfließenden Flüssigkeit bekannt, so dass aus dem stufenförmigen Höhenprofil auf die strömende Masse der Milch geschlossen werden kann.

Es ist eine nach diesem Prinzip arbeitende Vorrichtung bekannt geworden, bei der eine Vielzahl von etwa 60 Elektroden übereinander angeordnet ist. Um einen großen Höhenbereich und damit Messbereich abdecken zu können, ist zwischen jeder Elektrode in vertikaler Richtung ein bestimmter elektrodenfreier Abstand. In diesem elektrodenfreien Bereich kann der Zustand bei der Messung nicht detektiert werden. Bei z.B. 1,5 mm Abstand kann das einen Messfehler von fast 1,5 mm bedeuten, was bei geringen Milchflüssen mit geringen Füllhöhen im Bereich weniger Millimeter zu entsprechend großen Messfehlern führt.

Prinzipbedingt ist bei dieser bekannten Vorrichtung der mechanische und elektronische Aufwand groß, da eine große Anzahl von Elektroden verbaut und diese einzeln elektrisch angesteuert werden müssen. Weiterhin ist hierbei nachteilig, dass trotz der hohen Anzahl der verwendeten Elektroden der Milchfluss nur stufenweise ausgewertet wird und somit Ungenauigkeiten entstehen.

Die US 2004/0123671 A1 beschreibt ein Verfahren und eine Vorrichtung zum Messen des Michflusses, wobei die Milch in eine Messzelle eingeleitet wird, in welcher eine isolierte Elektrode und zwei nicht-isolierte Elektroden angeordnet sind. Mittels der drei Elektroden werden die Kapazität, die Phasenverschiebung und die Leitfähigkeit bestimmt. Nachteilig ist unter anderem der komplexe Aufbau mit drei Elektroden.

Die DE 80 28 360 U1 beschreibt eine Vorrichtung zur Messung der Standhöhe von elektrisch leitenden Flüssigkeiten mit einer als Fühler ausgebildeten Messelektrode und einer Hilfselektrode, insbesondere für den Einsatz in Wasch- und Spülmaschinen. Die Vorrichtung eignet sich jedoch für das Messen der Füllhöhe in einem Gefäß und nicht für das Ermitteln der Durchflussmenge bzw. eines Massenstroms.

Die US 5 245 946 A betrifft ein Verfahren und eine Vorrichtung zum Messen des Milchflusses während des intermittierenden Abtransport von ermolkener Milch über wenigstens einen Steigleitungsabschnitts, um beim Unter- oder Übersteigen eines vorbestimmten Milchflusses ein Steuersignal auszugeben.

Die Integration eines Sensors in den Milchweg mit vernünftiger Messgenauigkeit, bei einem in der Landwirtschaft vertretbaren Preis, stellt deshalb immer noch eine große Herausforderung dar.

Es ist deshalb die Aufgabe der vorliegenden Erfindung, eine Vorrichtung und ein Verfahren zur Bestimmung der Menge oder des Massenstromes einer insbesondere schäumenden Flüssigkeit zur Verfügung zu stellen, welche bzw. welches mit einfachen Mitteln eine angemessene Genauigkeit erzielt.

Diese Aufgabe wird erfindungsgemäß durch die Vorrichtung zur Messung eines Massenstromes einer insbesondere schäumenden Flüssigkeit mit den Merkmalen des Anspruchs 1, durch eine Anordnung nach Anspruch 25 und nach Anspruch 26, sowie das Verfahren mit den Merkmalen des Anspruchs 31 gelöst. Vorteilhafte Weiterbildungen sind Gegenstand der Unteransprüche.

Die erfindungsgemäße Vorrichtung ist insbesondere zum Messen des Massenstromes einer schäumenden und/oder einer Schaum produzierenden Flüssigkeit geeignet. Die Vorrichtung umfasst ein Gehäuse mit wenigstens einem Einlass und wenigstens einem Auslass, wobei in dem Gehäuse eine Messtrecke vorgesehen ist. Weiterhin ist wenigstens eine Messeinrichtung vorgesehen, welche an der Messstrecke angeordnet ist. Die Messeinrichtung umfasst wenigstens zwei von einander beabstandete Elektroden und eine Auswerteeinrichtung. Es ist ein elektrisches Mittel zum Anlegen einer elektrischen Größe an die Elektrode und ein Mittel zum Aufnehmen eines elektrischen Signals zwischen der ersten Elektrode und der zweiten Elektrode vorgesehen. Dabei ist die erste Elektrode länglich ausgebildet ist und so angeordnet ist, dass sie in die Flüssigkeit eintaucht und die Höhe der fließenden Flüssigkeit erfasst wobei die erste Elektrode beim Messen bis zu einer gewissen Höhe mit der Flüssigkeit benetzt ist und die Benetzung sowohl mit der flüssigen Phase als auch mit der eventuell vorhanden Schaumphase erfolgt. Das elektrische Mittel ist mit zwei voneinander entfernten Punkten der ersten Elektrode verbunden, so dass es parallel zur ersten Elektrode geschaltet ist und ein
Potential anlegbar ist, welches über die Länge der Elektrode abfällt. Weiterhin ist die zweite Elektrode über das Mittel zum Aufnehmen des elektrischen Signals mit der ersten Elektrode derart elektrisch verbunden ist, dass zur Ableitung des Massenstroms zwischen der ersten Elektrode und der zweiten Elektrode ein Potential gemessen wird

Die Erfindung hat viele Vorteile. Insbesondere ist die Erfindung geeignet, die Milchmenge einer Schaum enthaltenden und/oder Schaum produzierenden Flüssigkeit wie z.B. Milch zu bestimmen.

Die erfindungsgemäße Vorrichtung ist einfach zu reinigen, zu desinfizieren und zu warten, da keine bewegten Teile erforderlich sind. Der Aufbau des Messgehäuses kann sehr einfach sein.

Vorzugsweise wird der Fluidstrom im Durchfluss insbesondere während des Melkvorgangs gemessen. Dazu ist vorzugsweise eine Messstrecke an der Vorrichtung vorgesehen.

Ein zusätzlicher Vorteil ist, dass es mit der erfindungsgemäßen Vorrichtung möglich ist, beim Melken die stoßweise anfallende Milch im Durchfluss mit hoher Genauigkeit zu messen. Der pulsierende Milchstrom stellt hohe Anforderungen an das Messprinzip, die hier in hohem Maße erfüllt werden.

Ein weiterer wesentlicher Vorteil der erfindungsgemäßen Vorrichtung und der zuvor beschriebenen Weiterbildungen ist, dass jeweils die gesamte strömende Fluidmenge inklusive Schaumanteil gemessen wird. Wenn z.B. bei nachlassendem Milchfluss die Milch an den Elektroden langsamer abläuft, was durch die Oberflächenspannung (z.B. durch den Fettgehalt) bedingt wird, kann mit der erfindungsgemäßen Vorrichtung dennoch die korrekte Milchmenge bzw. der korrekte Milchstrom gemessen werden, da die Dichte gemessen und nicht der Füllstand bestimmt oder das Volumen gemessen wird.

Bei einer Vorrichtung gemäß der zuvor beschriebenen DE 37 37 607 A1 kann hingegen ein höherer Füllstand gemessen werden als wirklich vorliegt, wenn die Milch an den Elektroden langsamer abläuft, wodurch ein Messfehler entsteht. Es wird ein scheinbarer Milchfluss gemessen, der aber real nicht in dem Maße vorhanden ist. Ein solches "Anhaften" der Milch erfolgt beim Melken sehr häufig, da die Milch schwallweise strömt und so in jedem Pulszyklus ein solcher nachlassender Milchfluss auftreten kann.

Bei der erfindungsgemäßen Vorrichtung haben Adhäsionskräfte des Fluids am Sensor nahezu keinen Einfluss, da die Dichte und nicht der Füllstand gemessen wird.

Ein weiterer erheblicher Vorteil der Erfindung in allen Ausgestaltungen ist, dass eine stufenlose Messung möglich ist, die nicht von der Anzahl der Auswerteelektroden abhängt, wie es bei einem System nach der DE 37 37 607 A1 der Fall ist. Das Auflösungsvermögen solcher bekannter Vorrichtungen wird nämlich noch reduziert, wenn der Messbereich nicht vollständig ausgeschöpft wird. Um eine ausreichende Durchflussmessgenauigkeit zu erhalten, muss bei solchen Vorrichtungen die zu messende Durchflusshöhe hinreichend groß sein, weshalb das Messgehäuse vergleichsweise groß bzw. hoch ausgestaltet werden muss. Das ist bei der erfindungsgemäßen Vorrichtung nicht nötig, da die Auflösung grundsätzlich nicht von der konstruktiven Anordnung der Elektroden abhängt. So kann eine erfindungsgemäße Vorrichtung optimal auf den Milchfluss einer Tierrasse (z.B. Kühe oder Schafe) angepasst werden, um bei dieser Tierrasse sowohl maximal Milchfluss als auch geringe Milchflüsse optimal auflösen zu können.

Erfindungsgemäß ist die Messeinrichtung an einer Messstrecke angeordnet, die in einem Gehäuse der Vorrichtung vorgesehen sein kann. Das Gehäuse umfasst wenigstens einen Einlass und wenigstens einen Auslass. Zwischen Einlass und Auslass ist eine Messstrecke vorgesehen, in der die zu messende Flüssigkeit z.B. in einem Kanal geführt wird.

Beim Messen wird die Höhe der fließenden Flüssigkeit nicht stufenförmig, sondern kontinuierlich erfasst. Die Messgenauigkeit kann somit gesteigert werden.

Erfindungsgemäß wird nicht der Füllstand gemessen, sondern ein integrales Dichteprofil. Dabei ist prinzipbedingt eine kuhindividuelle Kalibrierung bzw. eine Kalibrierung nach Kuhrassen nicht nötig.

Der Massenstrom wird aus dem Dichteprofil abgeleitet. Dabei werden Kalibrierungswerte verwendet, in denen die vorrichtungsspezifischen Einflüsse berücksichtigt werden. Z.B. wird darin berücksichtigt, welche Strömungsgeschwindigkeit sich bei welchem Dichteprofil ergibt.

Die Ansprechzeit der Vorrichtung wird bestimmt durch die Ansprechzeit der elektronischen Auswertekomponenten, wodurch grundsätzlich eine schnelle Milchstrommessung ermöglicht wird.

Das erfindungsgemäße Messprinzip wird in allen Ausgestaltungen vorzugsweise mit einer Potentialmessung verwirklicht, indem eine potentiometrische Messung durchgeführt wird. An eine der Elektroden, z.B. an die erste Elektrode wird dazu ein Potential angelegt, welches über der Länge der Elektrode nahezu linear abfällt, wenigstens wenn Querschnitt und Materialeigenschaften über der Länge der Elektrode konstant sind.

Die erste Elektrode weist insbesondere eine ganz erhebliche räumliche Ausdehnung auf und ist erfindungsgemäß länglich ausgebildet. Die erste Elektrode weist insbesondere senkrecht zur Strömungsrichtung eine bedeutende Ausdehnung auf.

Die erste Elektrode ist beim Messen bis zu einer gewissen Höhe mit der schäumenden Flüssigkeit benetzt. Die Benetzung erfolgt dabei sowohl mit der flüssigen Phase als auch mit der eventuell vorhandenen Schaumphase. In das Fluid wird deshalb ein Potentialverlauf eingebracht, der von der Höhe und der Art der Benetzung abhängt. Das elektrische Mittel wird insbesondere mit zwei voneinander entfernten Punkten der ersten Elektrode verbunden, so dass es parallel zur ersten Elektrode geschaltet ist. Die zwei voneinander entfernten Punkte der ersten Elektrode können insbesondere an zwei Enden, insbesondere an den beiden Enden der ersten Elektrode angeordnet sein.

Die zweite Elektrode ist vorzugsweise ebenfalls räumlich ausgedehnt und insbesondere länglich ausgebildet, kann aber auch nur als punktuelle Elektrode oder Kontaktelektrode zum zu messenden Fluid ausgeführt sein.

Die zweite Elektrode ist nun in einem gewissen (horizontalen) Abstand zu der ersten Elektrode angeordnet. Die schäumende Flüssigkeit zwischen beiden Elektroden bildet insgesamt einen Widerstand. Die Höhe des Widerstandes wird integral durch das sich zwischen den Elektroden befindende Fluid gebildet. Je mehr Flüssigkeitsanteil vorhanden ist, desto kleiner ist der Widerstand und je mehr Schaumanteil im Volumen zwischen den beiden Elektroden vorhanden ist, desto größer ist der Widerstand. Der Widerstand hängt auch von dem horizontalen Abstand ab.

Ist das Fluid z.B. zwischen beiden Elektroden geschichtet, so dass unten eine Flüssigkeitsschicht und oben eine Schaumschicht vorliegt, so setzt sich der Gesamtwiderstand integral aus beiden zusammen. In diesem vereinfachten Fall kann man Flüssigkeits- und Schaumanteil in Näherung als eine Parallelschaltung ansehen. Dabei ist der spezifische Widerstand des Schaumanteils zwar viel höher als der spezifische Widerstand des Flüssigkeitsanteils, aber beide Anteile tragen zum Gesamtwiderstand bei. Deshalb ist der Gesamtwiderstand repräsentativ für die Dichte zwischen den Elektroden.

Erfindungsgemäß wird aber nicht der Widerstand zwischen den Elektroden gemessen, sondern das Potential. Das Potential wird von der ersten Elektrode in das zu messende Fluid eingebracht. Sind beide Elektroden von unten bis oben mit reiner Flüssigkeit bedeckt, wird von der ersten Elektrode ein gleitendes Potential zwischen z.B. 0 und 60 mV an die Flüssigkeit angelegt. Bei einer lokal homogenen Flüssigkeit zwischen den Elektroden wird zwischen beiden Elektroden dann der integrale Mittelwert 30 mV gemessen. Sind beide Elektroden nur bis zur halben Höhe benetzt, so wird an die Flüssigkeit ein über der Höhe der Elektrode gleitendes Potential zwischen 0 und 30 mV angelegt. Zwischen beiden Elektroden wird dann ein integrales Potential von 15 mV gemessen.

Liegt eine geschichtete Flüssigkeit vor, so wird durch die integrale Messweise bedingt der Schaumanteil direkt mit gemessen. Das Messverfahren erlaubt prinzipbedingt eine Messung von mit Schaum versetzter Flüssigkeit. Über das durch Kalibrierung bekannte Abflussverhalten kann durch die integral gemessene Dichte auf die strömende Fluidmenge geschlossen werden.

Da das Messprinzip in dieser Ausgestaltung im wesentlichen auf der Messung eines (elektrischen) Potentials beruht, wird ein tierphysiologisch signifikanter elektrischer Stromfluss durch das Fluid vermieden. Im Unterschied dazu erfolgt bei den bekannten Vorrichtungen und Verfahren aus dem Stand der Technik eine Messung des elektrischen oder optischen Widerstands.

Die Elektroden sind derart ausgelegt, dass der Eigenwiderstand erheblich geringer ist als der der flüssigen Phase des zu messenden Fluids. Dadurch wird ein "linearer" Potentialverlauf über der Höhe der ersten Elektrode sichergestellt, unabhängig von der Füllhöhe der flüssigen Phase oder des Schaumanteils.

Zweckmäßigerweise ist der Widerstand zwischen dem ersten und dem zweiten Ende jeder Elektrode erheblich kleiner als der Widerstand zwischen den Elektroden bei maximalem Pegelstand der flüssigen Phase des Fluids. Hierdurch wird sichergestellt, dass das sich um die Elektrode ausbildende elektrische Potential nicht wesentlich durch das Fluid beeinflusst wird. Hierdurch wird die Messgenauigkeit gesteigert. Es kann z.B. eine Elektrode mit einem elektrischen Widerstand von z.B. 100 Milliohm eingesetzt werden.

Wie schon ausgeführt, ist in bevorzugten Weiterbildungen aller zuvor beschriebener Ausgestaltungen das elektrische Mittel vorzugsweise eine Spannungsquelle oder ein Spannungserzeugungsmittel. Die elektrische Größe, die parallel an die erste Elektrode angelegt wird, ist dann eine elektrische Spannung. Mit der Spannungsquelle wird zwischen dem ersten Ende und dem zweiten Ende der ersten Elektrode eine elektrische Spannung angelegt. Vorzugsweise umfasst die Auswerteeinrichtung ein Spannungsmessmittel.

Vorteilhafterweise legt die Spannungsquelle zur Messung eine Spannung im Millivoltbereich an, insbesondere im Bereich bis etwa 100 mV, vorzugsweise Werte bis etwa 5 mV, 10 mV, 20 mV, 30 mV, 40 mV, 50 mV oder 60 mV.

Vorteilhafterweise erzeugt die Spannungsquelle eine Wechselspannung, um eine Abnutzung der Elektroden, und um elektrolytische Ablagerungen, die zu einer Verfälschung der Messergebnisse führen könnten, zu vermeiden. Dabei liegen die Frequenzen der durch die Spannungsquelle vorgegebenen Wechselspannung in einem geeigneten Bereich. Geeignet ist z.B. eine Frequenz von 1 kHz, aber auch andere Frequenzen sind möglich.

Das Spannungsmessmittel weist vorteilhafterweise einen hohen Innenwiderstand auf, wie es bei Spannungsmessmitteln üblich ist. Vorzugsweise ist der Innenwiderstand erheblich größer als der für die zu untersuchende Flüssigkeit typische elektrische Widerstand zwischen der ersten und der zweiten Elektrode bei minimaler Pegelhöhe.

Es ist auch eine Messung möglich, bei der anstatt der Spannungsquelle eine (Konstant-) Stromquelle verwendet wird, wobei dann anstatt des Spannungssensors ein Stromsensor vorgesehen ist und die elektrische Größe der elektrische Strom ist.

Bei einer solchen Ausgestaltung ist zu beachten, dass sich der Widerstand mit der Temperatur ändert. Das bedeutet, dass bei einer Konstantstromquelle sich eventuell ändernde Spannungsabfälle kompensiert werden müssen. Vorzugsweise wird dazu ein Temperatursensor angeordnet, der die Temperatur der strömenden Flüssigkeit oder der Elektrode erfasst.

Mit der erfindungsgemäßen Vorrichtung wird eine hohe Zuverlässigkeit erzielt, da keine Verschleißteile und keine bewegten Teile vorliegen. Vorzugsweise wird auch eine besonders hohe Messgenauigkeit angestrebt, um eine Zulassung durch die Milchkontrollverbände oder durch ICAR zu erhalten. Mit der erfindungsgemäßen Vorrichtung wird dann eine präzise Messung des Durchflusses ermöglicht. Eventuell dafür erforderlichen Aufwand apparativen oder finanziellen kann der Landwirt später an Zeit und Geld bei der regelmäßigen Milchleistungskontrolle einsparen.

Das Messsignal wird vorzugsweise in gewissen vorbestimmten oder wählbaren zeitlichen Abständen erfasst, so dass eine quasikontinuierliche Messung vorliegt.

Weiterhin ist es bevorzugt, dass die Vorrichtung derart strukturiert und beschaffen ist, dass eine hohe Messgeschwindigkeit erreichbar ist. Vorzugsweise ist die Messgeschwindigkeit derart hoch, dass auch bei hohen Milchflüssen, wie z.B. 10 oder 12 l/min. die nötigen Daten ausreichend schnell gemessen und verarbeitet werden.

Das Messprinzip erlaubt die genaue Messung des Massenstromes in einem hohen Messbereich von kleinen bis großen Flüssen ohne eine Kalibrierung mit dem konkret zu messenden Fluid durchzuführen. Die Genauigkeit der Messung hängt nicht von der Leitfähigkeit der Flüssigkeit ab, sofern eine minimale Leitfähigkeit gegeben ist, die aber sogar bei einfach destilliertem Wasser in der Regel vorliegt und damit erst recht für Leitungs- oder Brunnenwasser, Milch etc. Die Leitfähigkeit liegt somit bei Milch, normalem Leitungswasser und anderen Flüssigkeiten in einem Bereich, der gut zur Messung geeignet ist.

Auch systematische Änderungen der optischen, elektrischen oder physikalischen Eigenschaften des Fluids während des Messvorgangs werden inhärent berücksichtigt. Z.B. wirkt sich eine Leitwertänderung während eines Melkvorgangs zwischen 3000 und 6000 µS/cm nicht negativ auf das Messergebnis aus, obwohl sich der Leitwert um den Faktor 2 geändert hat. Es ist keine fortwährende Kalibrierung bzw. Kompensierung auf den Leitwert des Fluids nötig.

Bedingt durch das Messprinzip ist die Messung weitestgehend unabhängig vom Leitwert der Flüssigkeit (sofern dieser > = 1 µS/cm ist), von der Temperatur und vom Druck im Messbehälter. Grundsätzlieh ist das Messprinzip auch bei kleinen und kleinsten Leitfähigkeiten der zu untersuchenden Fluide möglich. Dabei ist zu berücksichtigen, dass einfach destilliertes Wasser einen Leitwert von z.B. 2 µS/cm, Leitungswasser einen Wert von etwa 20 bis 500 µS/cm hat und Milch im Bereich von etwa 2000 bis 8000 µS/cm liegt. Bei allen diesen Leitwerten ist eine zuverlässige Messung möglich.

Das hat den Vorteil, dass beim üblichen regelmäßigen Überprüfungen des Messgerätes beim Landwirt z.B. klares Wasser als Überprüfungsmedium genommen werden kann. Eine spezielle Kalibrierungslösung mit einem definierten Leitwert oder einer definierten Lichtdurchlässigkeit, wie sie bei anderen konventionellen Milchmengenmessgeräten erforderlich ist, wird bei der erfindungsgemäßen Vorrichtung nicht benötigt, um ein vernünftiges Messergebnis zu erzielen.

Die grundsätzliche Unabhängigkeit der Messung von der Leitfähigkeit der Flüssigkeit kann allerdings zu Ungenauigkeiten führen, wenn der Massenstrom versiegt und nur noch Schaum in der Messstrecke vorliegt. Denn aufgrund der Unabhängigkeit vom genauen Leitwert ist es für die Messeinrichtung dann nicht unterscheidbar, ob im Messbereich reine Flüssigkeit oder reine Schaumphase fließt. Liegt im Messbereich eine reine Schaumphase vor, so wird das gleiche Potential gemessen, als wenn eine reine flüssige Phase vorliegt. Es würde das gleiche Signal anliegen, obwohl der reale Massenstrom erheblich unterschiedlich wäre.

Das Problem von Fehlmessungen tritt nicht auf, wenn nur flüssige Phase oder wenn ein Anteil flüssiger Phase und ein Anteil Schaum vorliegt oder wenn ein Anteil Mischphase vorliegt. Durch das Messprinzip bedingt, werden solche Einflüsse automatisch berücksichtigt.

Zur Vermeidung der oben angeführten Messungenauigkeiten, wenn z.B. nur noch Schaumphase vorliegt, können verschiedene Maßnahmen durchgeführt werden.

In einem einfachsten Fall wird das Problem ignoriert und es werden nur Milchflusswerte in Melkphasen verwendet, bei denen der Milchfluss ein bestimmtes Maß überschreitet, wie z.B. in der Hauptmelkphase. Dazu kann der Messbereich in geeigneter Weise eingeschränkt werden, um Fehlmessungen auszuschließen. Das kann in zeitlicher Hinsicht erfolgen, so dass nach Durchlaufen des Maximums nur noch eine bestimmte Zeit lang gemessen wird. Dabei wird vorzugsweise so lang gemessen, wie ein hinreichender Massenstrom vorliegt, bei dem beide Elektroden auch mit flüssiger Phase des Fluids benetzt werden.

Es ist auch möglich, dass ein bestimmter zusätzlicher Widerstand zwischen die zwei Elektroden parallel zur Messstrecke geschaltet wird, der dadurch solche Messfehler verhindern kann. Dieser Widerstand simuliert sozusagen eine Grundhöhe flüssiger Phase. Wenn dann z.B. nur noch Schaum zwischen den Elektroden vorliegt, ist der elektrische Gesamtwiderstand zwischen den Elektroden entsprechend größer, so dass über den parallel geschalteten zusätzlichen Widerstand der größte Teil des Potentials abfällt. Deshalb wird ein genauerer Wert gemessen. Nachteilig ist allerdings, dass ein systematischer Fehler vorliegt, da dieser zusätzliche Widerstand nur auf einen Leitwert angepasst ist, der sich während des Melkens erheblich ändern kann. Ein Vorteil eines solchen Aufbaus ist allerdings die geringere Verschmutzungsgefahr.

Möglich ist es auch, den aktuellen Leitwert an einer anderen Stelle zu messen und den Widerstand fortwährend entsprechend anzupassen. Dann wird automatisch erkannt, ob nur noch Schaumphase vorliegt und Fehlmessungen können vermieden werden.

In allen Ausgestaltungen ist es bevorzugt, dass sich wenigstens eine, vorzugsweise beide Elektroden über die gesamte Höhe des Messschlitzes bzw. der Messfläche, insbesondere der Höhe der Messstrecke bzw. des Strömungskanals oder des Gehäuses erstrecken. Bevorzugt ist, dass die Elektroden aus der Messkammer herausragen, damit eine vor Einflüssen der zu messenden Flüssigkeit geschützte Kontaktierung ermöglicht wird.

Die Gestaltung und Anordnung der beiden Elektroden ist vorzugsweise derart, dass im Betrieb die flüssige Phase des Fluids in einem untersten Bereich von beiden Elektroden kontaktierbar ist. Die Ausmaße der Messstrecke sind dabei vorzugsweise derart, dass die oberen Enden der Elektroden nur bei maximalstem Fluss kontaktiert werden.

Eine weitere Möglichkeit zur Vermeidung solcher Ungenauigkeiten wird in einer bevorzugten Weiterbildung verwirklicht, in der sich beide Elektroden in eine Senke im Bodenbereich hinein erstrecken, die vorzugsweise im Bereich der Messstrecke angeordnet ist. Dabei stehen beim Messen die erste und die zweite Elektrode mit dem Fluid in der Senke oder in der Vertiefung elektrisch in Verbindung.

Vorzugsweise sind Aufbau und Strömungsführung derart, dass in der Senke die flüssige Phase des Fluids bzw. der zu messenden schäumenden Flüssigkeit auf natürliche Weise immer vorhanden ist. Dadurch wird eine ständige Kalibrierung auf die flüssige Phase vorgenommen. Wenn dann oberhalb der Senke im Messbereich nur noch Schaumphase vorliegt, wird zwischen den Elektroden ein Potential gemessen, welches die Dichte berücksichtigt.

Durch die Senke wird sichergestellt, dass selbst bei geringsten Milchflüssen beide Elektroden über eine flüssige Phase des Fluids elektrisch miteinander verbunden sind und keine Fehlmessungen entstehen können. Aufgrund der unterschiedlichen elektrischen Leitfähigkeit der flüssigen Phase und des Schaums stellt die elektrische Verbindung der beiden Elektroden über die flüssige Phase des sich in der Vertiefung befindlichen Fluids sicher, dass reiner Schaum nicht als eine reine flüssige Phase betrachtet wird.

Die Tiefe der Senke oder Vertiefung ist viel kleiner ausgestaltet als die Höhe des Kanals. Das Verhältnis kann größer als 1:5 sein und z.B. in einem Bereich zwischen etwa 1:10 und etwa 1:30 bei ungefähr 1:20 liegen.

Vorzugsweise weist die Senke in einer Weiterbildung einen Abfluss auf. Wenn der Abfluss bei der Messung fortwährend geöffnet ist, findet ein dauernder Austausch mit der Messflüssigkeit statt, so dass in der Senke fortwährend repräsentative Flüssigkeit vorhanden ist. Je nach Ausgestaltung der Senke und Eigenschaften der Messflüssigkeit könnte es ansonsten passieren, dass nur ein geringer Flüssigkeitsaustausch während des Messens erfolgt, wodurch Messfehler auftreten könnten.

Es ist aber auch eine Vertiefung ohne Abfluss möglich. Der Austausch erfolgt dann durch z.B. ein Mitreißen der Flüssigkeit in der Vertiefung.

Wenn ein Abfluss vorgesehen ist, so kann er verschließbar sein. Z.B. kann der Abfluss bei der Messung verschlossen bleiben, insbesondere wenn ein genügender Austausch der Flüssigkeit erfolgt. Zur Reinigung der Vorrichtung kann dann der Abfluss geöffnet werden, um eine einfachere Reinigung der Senke zu ermöglichen.

Der Abfluss kann beispielsweise durch eine kleine Ablaufrinne gebildet werden, welche die Senke mit dem Auslauf verbindet. Der Abfluss der Senke kann auch mit einem separaten Auslauf oder Anschluss verbunden sein. Wenn die Gestalt der Senke und der Vorrichtung derart ist, dass ein bestimmter Anteil des Fluids durch die Senke abgeleitet wird, so kann der Abfluss auch zum Entziehen einer repräsentativen Probe verwendet werden, um z.B. die genauen Inhaltsstoffe zu analysieren, um die Milchqualität beim Melken zu untersuchen. Dazu ist es möglich, dass z.B. 0,5% oder 1% oder einen einstellbaren Anteil abgeführt wird.

Ein erheblicher Vorteil des Abflusses ist, dass sich die Vertiefung am Ende des Melkens selbst entleert, wodurch sicher gestellt wird, dass nach dem Spülen keine Restmengen von Spülwasser in die Milch der nachfolgenden Kuh gelangen.

Vorzugsweise ist in dem Gehäuse ein Kanal vorgesehen, der wenigstens teilweise im Bereich der Messstrecke angeordnet ist.

In einer bevorzugten Weiterbildung der Erfindung ist wenigstens eine Elektrode als eine Einrichtung ausgebildet, die in den Kanal hineinragt.

Vorzugsweise weist wenigstens eine Elektrode eine z.B. stab- oder rohrförmige Form auf. Z.B. kann eine Elektrode als ein elektrisch leitender Stab ausgebildet sein. Es ist auch möglich, dass wenigstens eine Elektrode als runder, ovaler, eckiger, insbesondere viereckiger Stab, oder als eine ebene oder gebogene Platte ausgebildet ist. Eine derartige Wahl der Elektrodenform sorgt für eine zuverlässige Messung und eine preisgünstige Herstellung.

Möglich ist es auch, eine Elektrode oder zwei oder mehr Elektroden in die Wände des Kanals zu integrieren. Hierdurch wird eine einfache Reinigung und Wartung, sowie eine hohe Zuverlässigkeit der Messvorrichtung erzielt. Zudem wird die Strömung im Kanal nicht nachteilig beeinflusst.

In allen Ausgestaltungen ist vorzugsweise eine Strömungsverengung in dem Gehäuse insbesondere im Bereich der Messstrecke vorgesehen. Die Strömungsverengung kann ein Strömungswiderstand sein. Vorzugsweise ist die Strömungsverengung als Blende vorgesehen. Möglich ist auch eine Verengung des Strömungskanals über einen bestimmten Längenabschnitt.

Die Blende im Sinne dieser Anmeldung ist ein Strömungswiderstand, der vorzugsweise durch eine Verengung des freien Strömungsquerschnittes der Messstrecke gebildet wird, wobei der freie Strömungsquerschnitt vorzugsweise als Kanal ausgebildet ist.

Die Strömungsverengung ist vorgesehen, um die strömende Flüssigkeit aufzustauen. Vorzugsweise ist die Messeinrichtung bzw. sind die Elektroden in der Nähe der Strömungsverengung angeordnet.

Eine Blende ist auch schon aus einer Vorrichtung gemäß der DE 37 37 607 A1 bekannt. Im Unterschied zu einer solchen Vorrichtung kann die Blende bzw. der Ablaufschlitz erfindungsgemäß hier hingegen erheblich breiter gewählt werden, da die Auflösung der Messung nicht von der Füllstandshöhe abhängt. Bei der bekannten Vorrichtung mit einer Vielzahl von übereinander angeordneten Elektroden ist die Auflösung stufenförmig, so dass erst ab einer Füllhöhe, die einem Vielfachen eines Stufenabstandes entspricht, eine vernünftige Messauflösung erzielbar ist. Bei der vorliegenden Erfindung ist die Auflösung hingegen unabhängig von der Schlitzbreite, so dass ein breiterer Schlitz vorgesehen werden kann.

Dadurch wird auch das Problem einer Verstopfung des Ablaufschlitzes durch Fremdpartikel erheblich verringert. Ein mit einem Verstopfen des Abflusses verbundenes Anstauen des Fluids vor dem Ablaufschlitz spiegelt einen höheren Durchfluss vor, als tatsächlich vorliegend. Deshalb werden bei der bekannten Vorrichtung gemäß der DE 37 37 607 A1 Siebe im Bereich des Einlaufes vorgeschaltet, die eine regelmäßige Reinigung erfordern. Dadurch ist ein Dauereinsatz der bekannten Vorrichtung in fest eingebautem Zustand an einem Melkgerät erheblich erschwert, da der zusätzliche Wartungs- und Reinigungsaufwand groß ist.

Dieser Nachteil wird durch die Weiterbildung der erfindungsgemäßen Vorrichtung vermieden. Die Auflösung hat keine stufenmäßige Begrenzung, die durch die Messelektroden vorgegeben wird. Mit der stufenlosen Messwertaufnahme ist prinzipbedingt eine sehr hohe Genauigkeit möglich. Die Strömungsbreite und der Auslaufquerschnitt bzw. der Ablaufschlitz können größer gestaltet werden als bei der aus dem Stand der Technik bekannten Vorrichtung. Ein erheblicher Vorteil daran ist, dass Fremdkörper oder Fremdpartikel, die sich in der Milch befinden, abgeleitet werden und nicht den Strömungsweg verstopfen. Solche Fremdpartikel können z.B. Stroh, Einstreu oder Futtermittelreste in Form von z.B. Maiskörnern sein.

Futtermittelreste oder andere Fremdkörper wie Strohreste können z.B. beim Herunterfallen oder beim Abtreten eines Zitzenbechers von dem Boden aufgesaugt werden, bevor das Vakuum abgeschaltet wird. Auch bei unzureichender Reinigung der Zitze können Fremdkörper in die Milch gelangen, die dann den Ablaufschlitz verstopfen können, insbesondere wenn dieser so schmal ist, dass z.B. Maiskörner nicht hindurch passen. Auf vorgeschaltete Filter kann verzichtet werden.

Vorteilhafterweise ist der Querschnitt der Strömungsverengung bzw. Blende veränderbar. Besonders bevorzugt ist die Blende austauschbar. Dadurch wird es ermöglicht, die Größe des hydrodynamischen Widerstands einzustellen. Das hat den Vorteil, dass auch bei kleineren maximalen Milchflüssen (z. B. bei euterviertelgetrenntem Melken oder bei Tieren mit geringen maximalen Milchflüssen wie z. B. Schafen oder Ziegen) eine ähnlich gute Messgenauigkeit und Messauflösung erzielt werden kann, da auch dann die komplette Messbereichshöhe genutzt wird. Wird der verfügbare Messbereich der Vorrichtung für eine jeweilige Messung optimal ausgenutzt, wird eine besonders hohe Genauigkeit bei der Messung erzielt.

In bevorzugten Ausgestaltungen ist wenigstens eine Elektrode durch ein Gehäuseteil gebildet oder daran angeformt. Beispielsweise kann eine Elektrode oder es können beide Elektroden in der Wand oder auf der Wand des Kanals vorgesehen sein. Es kann auch wenigstens eine Elektrode an der Strömungsverengung oder an der Blende angeordnet sein.

Im Falle einer Blende als Strömungsverengung kann auf den gegenüberliegenden Seiten jeweils eine Elektrode vorgesehen sein. Dann ist es bevorzugt, dass die Schlitzbreite der Blende durch beide Elektroden vorgegeben oder wenigstens beeinflusst wird. Vorzugsweise sind beide Elektroden an der Blende vorgesehen.

Es ist von erheblichem Vorteil, wenn der Strömungswiderstand wenigstens teilweise durch die Elektroden gebildet wird. Dann bilden die Elektroden und die Blende eine integrale Komponente. Beispielsweise wird eine Elektrode in die Oberfläche des Strömungswiderstandes integriert. Durch diese Maßnahme wird eine weitere Vereinfachung des Aufbaus erzielt.

In bevorzugten Ausgestaltungen ist wenigstens eine Elektrode stromaufwärts von der Blende bzw. von dem Strömungswiderstand angeordnet.

Eine Elektrode kann zweckmäßigerweise in einem von der Blende angestauten Bereich, vorteilhafterweise möglichst in der Nähe des Strömungswiderstandes, platziert werden, um den Massenstrom möglichst genau zu bestimmen. Die zweite Elektrode kann etwas stromaufwärts von der Blende angeordnet werden, kann jedoch auch mit dem Strömungswiderstand gegenständlich verbunden sein.

In anderen Ausgestaltungen ist wenigstens im Bereich der Elektroden keine Querschnittsverengung vorgesehen. Der Messbereich, in dem die Elektroden angeordnet sind, ist dann vorzugsweise als einfach mehreckiger Kanal ausgebildet. Insbesondere ist eine runde oder auch ovale Querschnittsform bevorzugt. Wenn dann die Elektroden in die Kanalwände integriert sind, wird der Massenstrom des strömenden Fluids bestimmt, ohne dass eine Querschnittsverengung vorhanden sein muss. Eine solche Gestaltung kann insbesondere bezüglich des Schaumabtransports Vorteile bieten.

Stehender Schaum, der nicht durch die flüssige Phase abtransportiert wird, kann, wenn er das freie Volumen oberhalb der flüssigen Phase ganz ausfüllt, auf die flüssige Phase drücken und so die Strömung beschleunigen, so dass die Strömungsgeschwindigkeit nicht mehr mit der Strömungsgeschwindigkeit übereinstimmt. Deshalb sind Vorrichtungen bevorzugt, bei denen der Schaumanteil untergemischt und abtransportiert wird.

Wenn ein z.B. dreieckiger Kanal mit einer Spitze nach unten vorgesehen wird, dann kann auf die zuvor beschriebene Senke verzichtet werden, da sich im unteren Bereich dann in der Regel eine flüssige Phase befinden wird.

Zur Stabilisierung der Druckverhältnisse und um Auswirkungen von sich verändernden Druckverhältnissen auf die Strömungsgeschwindigkeit und somit die Messgenauigkeit zu vermeiden, ist es bevorzugt, einen Druckausgleich über der Vorrichtung vorzusehen.

Mit einer Einrichtung zum passiven oder auch aktiven Druckausgleich über der Messvorrichtung wird erreicht, dass die Strömungsgeschwindigkeit wesentlich durch die Schwerkraft bedingt wird, wobei erhebliche Einflüsse auch durch den Massenstrom selbst vorliegen können. Durch eine solche Einrichtung zum Druckausgleich wird erreicht, dass sich die Strömungsgeschwindigkeit über den gesamten Messbereich entsprechend einer einfachen Kalibrierung verhält.

Ohne Druckausgleich zwischen Einlass und Auslass der Vorrichtung kann die Strömungsgeschwindigkeit auch von der aktuellen Drucksituation abhängen. Denn wenn bei gleicher Dichteverteilung über der Höhe in einem ersten Fallbeispiel ein höherer Druckunterschied über der Messstrecke herrscht als in einem zweiten Fallbeispiel, so wird die Milch im ersten Fallbeispiel schneller strömen als im zweiten. Tritt z.B. bei einem Zitzengummi zusätzlich Luft ein, so wird die Strömung der Milch durch die eingelassene Luft beschleunigt. Außerdem kann auch ein lokaler Druckaufbau über der Messstrecke stattfinden, der die Strömungsgeschwindigkeit erhöht.

Da in der Regel keine separate Geschwindigkeitsmessung erfolgt, sondern auf Kalibriermessungen zurückgegriffen wird und die Geschwindigkeit durch den zusätzlichen Luftstrom beeinflusst wird, ist dann keine genaue Bestimmung des Massenstromes mehr möglich. Der anhand der Kalibrierkurve bestimmte Massenstrom stimmt dann jeweils nicht mehr mit dem aktuellen Massenstrom überein. Durch konstruktive Maßnahmen kann ein solcher Einfluss aber verringert oder vermieden werden.

Für die Messung ist es deshalb vorteilhaft, wenn im Wesentlichen konstante Druckverhältnisse vorliegen. Bei bekanntem Einfluss des Druckunterschiedes kann auch die Messung des Druckunterschiedes über der Messstrecke ausreichen, um aus dem Höhenprofil der Dichte und dem Druckunterschied die Masse der aktuellen Strömung zu berechnen. Das ist allerdings aufwändiger.

Vorzugsweise wird deshalb mit einem Druckausgleich zwischen Einlass und Auslass der Druck über der Messstrecke stabilisiert. In einer speziellen Ausgestaltung der Erfindung wird der Druck über der Vorrichtung mit Hilfe eines aktiven Druckerzeugungsmittels stabilisiert.

Vorzugsweise ist dazu aber ein passives Mittel, nämlich ein Bypass vorgesehen, der so angeordnet und aufgebaut ist, dass im wesentlichen nur gasförmige Phase, also Luft, über den Bypass abgeleitet wird und nicht etwa Schaum oder flüssige Phase. Ein Bypass eignet sich insbesondere zur Vermeidung eines Staudrucks. Der Bypass ist besonders bevorzugt in der Nähe des Einlasses vorgesehen, insbesondere aber vor der Messeinrichtung bzw. den Elektroden.

Durch den Bypass bedingt, stellt die Vorrichtung zur Messung eines Massenstromes keinen wesentlichen Strömungswiderstand dar. Durch die zusätzliche Druckversorgung wird sichergestellt, dass am Zulauf annähernd der gleiche Druck herrscht, wie in der Melkleitung vor bzw. hinter der Vorrichtung zur Messung des Massenstromes. Es kommt so innerhalb der Vorrichtung nicht zu einem Druckgefälle, durch das die Strömungsgeschwindigkeit des Fluids oder der Melkprozess beeinflusst wird.

Vorzugsweise umfasst der Bypass einen Bypassanschluss, um die Vorrichtung druckfrei zu halten. Der Anschluss des Bypasses kann z.B. als Bypassstutzen ausgeführt sein.

Vorzugsweise dient der Bypassanschluss weiterhin dazu, einen größeren Anteil der milchfreien Luftströmung direkt abzuführen. Durch die Abfuhr eines erheblich Luftanteils wird die Schaumbildung innerhalb der Messtrecke reduziert. Weiterhin wird durch die abgeführte Luft ein negativer Einfluss auf die Strömungsgeschwindigkeit verhindert. Der Bypassanschluss kann dazu mit dem Einlass zusammen als Zyklonabscheider dienen und mit dem Auslass der Vorrichtung in strömungstechnischer Verbindung stehen.

Die Vorrichtung kann weiterhin eine Beruhigungsstrecke zur Beruhigung und/oder Vergleichmäßigung der Strömung vor dem Messsensor aufweisen. Hierdurch kann die Messgenauigkeit weiter gesteigert werden.

In allen zuvor beschriebenen Ausgestaltungen kann auch wenigstens eine dritte Elektrode vorgesehen sein, die in bevorzugten Weiterbildungen von oben in die Messstrecke hinein ragt.

Mittels der Messwerte einer dritten Elektrode, die neben der zweiten Elektrode als Sensor bzw. Detektor eingesetzt wird, kann eine Mittelwertbildung der beiden Sensoren durchgeführt werden, um die Genauigkeit noch weiter zu steigern. Die zweite und die dritte Elektrode können dann alternierend oder gleichzeitig abgegriffen werden.

Wenn die dritte Elektrode sich von oben nicht über die vollständige Höhe nach unten hin, sondern von oben aus nur über einen Teil der Höhe erstreckt, kann mit der dritten Elektrode eine sich eventuell oben absetzende Schaumschicht detektiert werden. Wenn die Messergebnisse der zweiten und dritten Elektrode sich entsprechend unterscheiden, kann gefolgert werden, dass die zweite Elektrode unten von flüssiger Phase umgeben ist, während sich im oberen Bereich Schaum befindet, den die dritte Elektrode im wesentlichen detektiert. Mittels einer entsprechenden Auswertung können dann Ungenauigkeiten bei der Messung auch ohne Senke oder Vertiefung vermieden werden.

In einer bevorzugten Weiterbildung der Erfindung sind wenigstens drei Elektroden vorgesehen, wobei an die erste Elektrode eine elektrische Größe angelegt wird. Zwischen der ersten und der zweiten Elektrode wird ein erster Messwert abgegriffen und zwischen der ersten und der dritten Elektrode wird ein zweiter Messwert abgegriffen. Wenn nun die zweite und die dritte Elektrode in Strömungsrichtung beabstandet angeordnet sind, kann mit Hilfe des ersten und des zweiten Messwertes eine Neigung der Vorrichtung ermittelt werden. Zur Ermittlung des Neigungswinkels wird die Vorrichtung insbesondere vor dem eigentlichen Messbetrieb mit einem Fluid teilweise gefüllt und vorzugsweise verschlossen, so dass das Fluid nicht abfließen kann. Durch die Messwerte kann dann auf eine Neigung geschlossen werden. Dabei kann auch die dreidimensionale Neigung ermittelt werden, wenn insgesamt vier Elektroden geeignet angeordnet sind.

Nach erfolgter Ermittlung des Neigungswinkels bzw. der Neigungswinkel kann dieser Wert zur Korrektur der Kalibrierung verwendet werden. Es ist auch möglich, dass mittels des ermittelten Winkelwertes auf eine im Speicher der Vorrichtung abliegende geeignete Kalibrierungskurve zurückgegriffen wird. Insgesamt ist die Zuverlässigkeit und Genauigkeit dadurch noch steigerbar.

In bevorzugten Weiterbildungen aller zuvor beschriebenen Weiterbildungen kann ein separater Neigungssensor vorgesehen sein. Dazu ist ein im Stand der Technik bekannter Neigungssensor geeignet. Das Signal bzw. die Signale des Neigungssensors werden verwendet, um eine geeignete Kalibrierungskurve aus einer Schar von Kalibrierungskurven auszuwählen, oder um einen festen oder flexiblen Korrekturwert für die Messwerte auszuwählen.

Wenn ein separater Neigungssensor integriert ist, hat das den Vorteil, dass in festen oder unregelmäßigen Abständen die Ausrichtung der Vorrichtung überprüfbar ist. Die Überprüfung kann einmal pro Zeitabschnitt, wie z.B. einmal pro Woche oder Tag, oder vorzugsweise wenigstens einmal pro Messvorgang durchgeführt werden. Die Feststellung der Lage kann auch während des Messens durchgeführt werden, indem bei Aufnahme jedes Messwertes oder jedes X-ten Messwertes die Signale des Neigungssensors berücksichtigt werden.

In einer besonders bevorzugten Weiterbildung ist eine Messkammer für den Neigungssensor vorgesehen, die an der Vorrichtung angeordnet ist. Der Neigungssensor kann nach dem oben beschriebenen Messprinzip arbeiten. In der Messkammer für den Neigungssensor sind dann drei, vorzugsweise wenigstens vier Elektroden angeordnet. Die Anordnung der Elektroden wird dabei so gewählt, dass wenigstens in Strömungsrichtung des zu messenden Fluids ein Neigungswinkel bestimmbar ist. Es ist möglich, dass für die Messeinrichtung zur Bestimmung der Menge oder des Massenstromes des Fluids und für den Neigungssensor insgesamt eine Auswerteeinrichtung vorgesehen ist.

In einer anderen Ausgestaltung der Erfindung wird in der Regel nicht im Durchfluss gemessen, sondern es wird kontinuierlich die in einen Messbehälter hineingeleitete Fluidmenge bestimmt, die insbesondere während des Melkens aufgefangen wird. Bei dieser Ausgestaltung nimmt der Messbehälter das Fluid über wenigstens einen Zeitraum auf. Nach Füllen des Messbehälters kann der Behälter wieder entleert werden. Auch ein periodisches Auffüllen und Ablassen des aufgefangenen Fluids während des Messvorgangs ist möglich, insbesondere wenn das Volumen des Behälters nicht ausreicht, um die gesamte Fluidmenge für einen Messvorgang zwischenzuspeichern.

Bei einer Ausführung mit Messbehälter erstrecken sich die Elektroden über die gesamte zur Messung verwendete Höhe des Messbehälters. Vorzugsweise ist der Querschnitt des Messbehälters über der Höhe nahezu gleich. Ansonsten kann auch eine Kalibrierung auf die Geometrie des Messbehälters erfolgen.

Bei dieser Ausgestaltung ist die Auswerteeinrichtung geeignet, eine Masse des Fluids in dem Messbehälters zu bestimmen. Durch die Differenz des Fluidinhalts des Messbehälters zwischen einem zweiten Zeitpunkt und einem ersten Zeitpunkt kann die in dieser Zeitspanne hinzugekommene Fluidmenge abgeleitet werden. Dividiert durch die Zeitspanne ergibt sich der Massenstrom des Fluids. Da die Messfrequenz sehr hoch sein kann, da der nötige Zeitabstand zwischen einer ersten und einer zweiten Messung klein ist, kann eine kontinuierliche oder doch wenigstens eine quasikontinuierliche Ermittlung der Menge bzw. des Massenstromes durchgeführt werden.

Wird die erste Messung der Menge M1 zu einem Zeitpunkt T1 und die zweite Messung mit einem Messergebnis M2 zu einem Zeitpunkt T2 durchgeführt, ergibt sich der Massenstrom zu (M2_{(T2)}-M1_{(T1)})/(T2-T1). Bei z.B. einem Zeitabstand von 1 Sekunde wird so bei einem Milchfluss von z.B. 120 g/min. eine Massendifferenz von 2 Gramm gemessen, womit eine Bestimmung des Milchflusses in mehr als ausreichender Genauigkeit durchführbar ist. Bei einer höheren Messfrequenz ist die Auflösung entsprechend höher.

In einer Ausgestaltung mit Messbehälter wird jedenfalls immer die gesamte bisherige Fluidmenge (seit dem letzten Ablassen des Messbehälters) bestimmt. Zusätzlich kann der aktuelle Massenstrom durch Differenzbildung bestimmt werden. Die Messwerte können geglättet werden, indem z.B. eine gleitende Mittelung oder ein sonstiges Filterverfahren angewendet wird.

Der Einsatz eines Messbehälters zur Messung ist insbesondere dann bevorzugt, wenn während des Messvorgangs eine Analyse des zu messenden Fluids durchgeführt wird. Z.B. kann während des Melkens online ein Teil der ermolkenen Milch abgeleitet und analysiert werden. Wenn die Milch bestimmten Kriterien nicht genügt, kann die Milch nach dem Melkende verworfen werden, ohne erst in den Milchtank zu gelangen. Z.B. kann das erfolgen, wenn die Milch vordefinierten Anforderungen nicht genügt, so z.B. wenn die Zellzahl über einem bestimmten Grenzwert liegt, oder wenn Flocken in der Milch detektiert wurden oder Hemmstoffe in der Milch ermittelt wurden etc..

Die Bestimmung erfolgt vorzugsweise kontinuierlich, damit eine zeitnahe Bestimmung des Milchflusses und somit eine zeitnahe Steuerung des Melkablaufes möglich ist. Dann kann der Massenstrom, d.h. die Menge Flüssigkeit pro Zeit, bestimmt werden.

Auch bei Messung im Durchfluss kann ein Behälter zur Aufnahme und Zwischenspeicherung des zu messenden Fluids vorgesehen sein, um zusätzlich zur Durchflussmessung noch eine Gesamtmessung durchzuführen, oder um das Fluid zwischenzuspeichern, bis Messergebnisse über Inhaltsstoffe des Fluids vorliegen und dergleichen mehr.

In allen zuvor beschriebenen Ausgestaltungen ist die gute Reinigungsmöglichkeit der Vorrichtung ein erheblicher Vorteil. Das Messprinzip erlaubt einen einfachen Aufbau der Vorrichtung, der neben der einfachen Reinigung auch eine einfache Wartung ermöglicht, da keine fragilen oder mechanisch beweglichen Teile oder empfindliche optische Komponenten benötigt werden.

In einer bevorzugten Weiterbildung umfasst die Erfindung eine Anordnung mit wenigstens zwei Vorrichtungen, wie sie zuvor beschrieben wurden.

Um weitere Informationen über den Massenstrom oder das Fluid zu erhalten, können zwei oder mehr Vorrichtungen zur Massenstrommessung vorgesehen werden. Vorteilhafterweise werden zwei oder mehr wie oben beschriebene Vorrichtungen in Reihe geschaltet. Auch eine Parallelschaltung ist möglich, insbesondere, wenn das Aufteilungsverhältnis zwischen den einzelnen Vorrichtungen festliegt oder bekannt ist. Mit der Information der Größe des Massenstromes an verschiedenen Stellen der Fluidleitung können durch Verunreinigungen bedingte Störungen (Blockieren des freien Durchlassquerschnitts des Kanals durch Anlagerung von Stroh, Maiskörner usw.) festgestellt und ggf. aus den Messergebnissen herausgerechnet werden, bzw. es kann ein Wartungssignal ausgegeben werden.

Weiterhin betrifft die Erfindung eine Anordnung zum Messen von wenigstens zwei Mengen oder Massenströmen von insbesondere schäumender Flüssigkeit. Die Anordnung umfasst wenigstens ein elektrisches Mittel zum Erzeugen einer elektrischen Größe und wenigstens eine Auswerteeinrichtung. Wenigstens zwei Vorrichtungen mit jeweils angeordneter Messtrecke bzw. jeweils angeordnetem Messbehälter und jeweils wenigstens zwei Elektroden sind vorgesehen. Das elektrische Mittel ist alternierend im Wesentlichen parallel zu der ersten Elektrode der ersten Vorrichtung und im Wesentlichen parallel zu der ersten Elektrode der zweiten Vorrichtung schaltbar. Vorzugsweise weist jede Vorrichtung ein separates Gehäuse auf.

Werden Messungen des Massenstromes an wenigsten zwei unterschiedlichen Stellen durchgeführt, dann können durch Vergleich der Messungen an den verschiedenen Stellen entlang einer Fluidleitung Rückschlüsse über die Struktur des Fluids und auf den Massenstrom gezogen werden. Hier bietet sich eine zeitliche Korrelation der an den unterschiedlichen Stellen bestimmten Massenströme an, um wenigstens eine die Struktur des Fluids kennzeichnende Größe zu ermitteln. Beispielsweise kann aus den Daten die Strömungsgeschwindigkeit abgeleitet werden. Es können auch abrupte partielle Verstopfungen des Ablaufschlitzes oder des Messbereichs erfasst werden und aus den Messergebnissen herausgerechnet werden. Darüber hinaus können aus dem Vergleich der beiden Messergebnisse Rückschlüsse über die Genauigkeit der Messung, insbesondere über Fehlerbreiten, gezogen werden. Auch können Informationen über den Melkvorgang gewonnen werden.

Gemäß einer weiteren erfinderischen Idee betrifft die Erfindung eine Anordnung zum Messen von wenigstens zwei Mengen oder auch Massenströmen von insbesondere schäumender Flüssigkeit. Wenigstens ein elektrisches Mittel zum Erzeugen einer elektrischen Größe und wenigstens eine Auswerteeinrichtung sind vorgesehen. Weiterhin sind wenigstens zwei Vorrichtungen mit jeweils angeordneter Messtrecke oder jeweils einem Messbehälter vorgesehen. Die Messtrecke oder das Gehäuse weisen jeweils wenigstens zwei Elektroden auf. Dabei ist die Auswerteeinrichtung alternierend zwischen die erste und die zweite Elektrode einer Vorrichtung und zwischen die erste und die zweite Elektrode einer anderen Vorrichtung schaltbar. Vorzugsweise umfasst jede Vorrichtung ein separates Gehäuse.

In einer bevorzugten Weiterbildung ist für wenigstens zwei Vorrichtungen genau ein elektrisches Mittel und genau eine Auswerteeinrichtung vorgesehen. Es ist aber auch möglich 3, 4, 5, 6, 7, 8 oder mehr Vorrichtungen insgesamt mit genau einem elektrischen Mittel und mit genau einer Auswerteeinrichtung zu versehen. Es ist auch möglich, dass ein elektrisches Mittel für einige Vorrichtungen und für jede Vorrichtung jeweils eine Auswerteeinrichtung vorgesehen ist. Es kann auch eine Auswerteeinrichtung für einige Vorrichtungen und für jede Vorrichtung jeweils ein elektrisches Mittel vorgesehen sein.

In einer bevorzugten Weiterbildung sind wenigstens zwei Vorrichtungen parallel angeordnet, die z.B. für unterschiedliche Durchflüsse vorgesehen und z.B. optimiert sind.

Mit der Anordnung können insbesondere zwei oder mehr voneinander baulich und räumlich getrennte Mengen- oder Massenströme bestimmt werden. Jede Vorrichtung der Anordnung dient zur Bestimmung von unabhängigen Mengen- oder Massenströmen, aus z.B. zwei verschiedenen Zitzen eines zu melkenden Tieres.

Vorzugsweise ist für eine zitzenindividuelle Messung eine entsprechende Anzahl an Vorrichtungen vorgesehen. Zur Messung des Milchmengenstroms bei z.B. Ziegen können zwei Vorrichtungen, bei Kühen dann vier Vorrichtungen zur viertelindividuellen Messung vorgesehen sein.

Es ist bei Messung der Milchmenge oder des Milchmassenstromes z.B. möglich, dass für eine Anzahl von Melkplätzen eine Anordnung insgesamt bereitgestellt wird. So kann bei einem Melkstand jeder Melkplatz oder ein Teil der Melkplätze mit einer Messtrecke oder einem Messbehälter ausgerüstet sein, während eine (zentrale) Auswerteelektronik die Messwerte aufnimmt. So kann bei einem Melckarussell nur eine Auswerteelektronik vorhanden sein.

In einer bevorzugten Weiterbildung der erfindungsgemäßen Anordnung ist eine erste Vorrichtung mit einem kleineren Strömungsquerschnitt und es ist eine zweite Vorrichtung mit einem größeren Strömungsquerschnitt vorgesehen. Die Vorrichtung mit dem größeren Querschnitt kann bei höheren Milchflüssen dazugeschaltet werden, um den Messbereich zu erhöhen bzw. die Genauigkeit noch weiter zu steigern.

Das erfindungsgemäße Verfahren zur Messung eines Massenstromes einer schäumenden und/oder Schaum enthaltenden bzw. produzierenden Flüssigkeit wie beispielsweise Milch mit einer Vorrichtung, wie sie zuvor beschrieben wurde. Dabei ist die erste Elektrode bis zu einer gewissen Höhe mit der schäumenden Flüssigkeit benetzt, wobei die Benetzung sowohl mit der flüssigen Phase als auch mit der eventuell vorhanden Schaumphase erfolgt. Es wird eine elektrische Größe an die erste Elektrode angelegt, sodass in die Flüssigkeit ein Potentialverlauf eingebracht wird, der von der Höhe und der Art der Benetzung Abhängt. Es wird ein Potential zwischen der ersten Elektrode und der zweite Elektrode gemessen und der Massenstrom daraus abgeleitet.

Zur Messung kann das Fluid mit Hilfe einer Blende angestaut und das Dichteprofil im angestauten Bereich gemessen und der Massenstrom abgeleitet werden. Bei Kenntnis der hydrodynamischen Eigenschaften der Blende, der Messtrecke und des Gehäuses kann der Massenstrom mit Hilfe des Dichteprofiles des Fluids berechnet werden. Besonders einfach ist die Ableitung über eine Kalibriermessung.

Weitere Vorteile, Merkmale und Ausgestaltungen der Erfindung werden nun in den folgenden Ausführungsbeispielen mit Bezug auf die Figuren erläutert. Darin zeigen schematisch:
- Fig. 1: eine erfindungsgemäße Vorrichtung zur Messung eines Massenstromes in perspektivischer dreidimensionaler Ansicht mit eingesetzter Blende;
- Fig. 2: die Vorrichtung nach Fig. 1 mit herausgezogener Blende;
- Fig. 3: eine erfindungsgemäße Vorrichtung im Längsschnitt;
- Fig. 4A: eine erfindungsgemäße Vorrichtung nach Fig. 1 im Querschnitt im Bereich der Messeinrichtung;
- Fig. 4B: eine zweite Ausgestaltung einer erfindungsgemäßen Vorrichtung im Querschnitt im Bereich der Messeinrichtung;
- Fig. 5: ein als Blende ausgestalteter Strömungswiderstand für größere Massenströme;
- Fig. 6: ein als Blende ausgestalteter Strömungswiderstand für kleinere Massenströme;
- Fig. 7: einen Längsschnitt durch einen Strömungswiderstand eines weiteren Ausführungsbeispiels einer erfindungsgemäßen Vorrichtung; und
- Fig. 8: ein elektrisches Ersatzschaltbild für eine erfindungsgemäßen Vorrichtung.

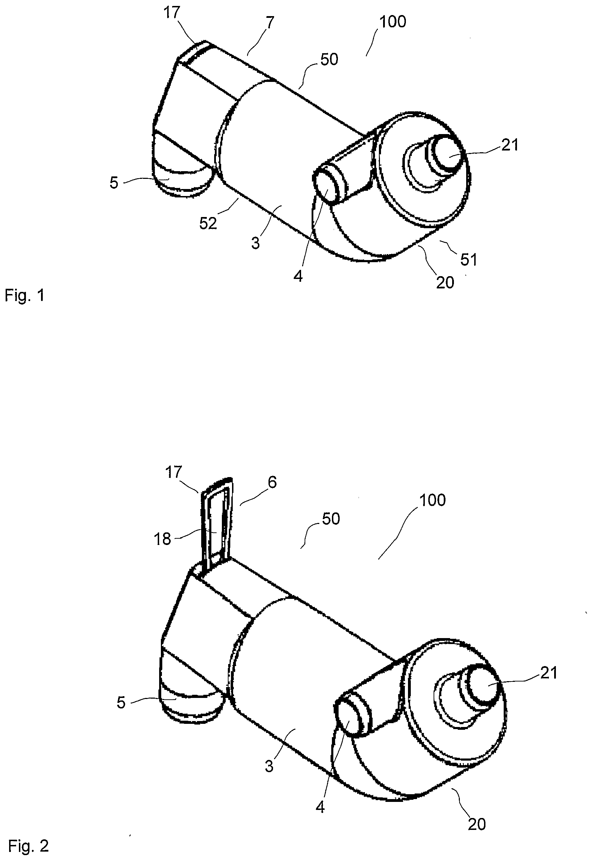

Figuren 1 und 2 zeigen ein erstes Ausführungsbeispiel einer erfindungsgemäßen Vorrichtung 100 in einer perspektivischen Ansicht zur Messung eines Massenstromes eines Fluids 1, insbesondere einer Schaum enthaltenden Flüssigkeit bzw. einer schäumenden Flüssigkeit wie beispielsweise Milch. In der Nähe des Einlaufs 4 des Gehäuses 50 ist ein Druckausgleichsstutzen 21 zur Entlüftung vorgesehen. Der Einlauf 4 führt tangential in das Gehäuse 50, so dass die Flüssigkeit rotierend in das Gehäuse einläuft. Weiter ist ein Kanal 3 vorgesehen, der sich an den Einlauf/ Zulauf 4 anschließt.

Ein Messsystem 7 ist in diesem Ausführungsbeispiel im Kanal 3 vor einer Blende 17 angeordnet, wobei die Blende 17 hier stromaufwärts vor einem Abfluss 5 angeordnet ist. Die Blende 17 dient als Strömungswiderstand 6 (siehe Fig. 2). In bevorzugten Ausgestaltungen kann die Blende je nach Bedarf eingesetzt (siehe Fig. 1) oder ausgewechselt (siehe Fig. 2) werden. Durch Auswechseln der Blende 17 kann der Strömungswiderstand an unterschiedliche Gegebenheiten angepasst werden, da z.B. beim Melken von Schafen oder Ziegen der maximale Milchfluss erheblich geringer als beim Melken von Kühen ist.

Die Blende 17 weist einen trapezförmigen Öffnungsquerschnitt 18 auf, der mit zunehmender Höhe zunimmt. Mit der Blende 17 wird die Größe des hydrodynamischen Widerstands des Strömungswiderstands 6 vorgegeben. Zur Veränderung des Strömungswiderstandes kann beispielsweise der freie Öffnungsquerschnitt sowie seine Konizität verändert werden. Über die Entlüftungsvorrichtung bzw. den Bypassstutzen 21 wird die Messvorrichtung insgesamt im Wesentlichen druckfrei gehalten, indem ein Teil der Luft abgeführt wird, welche in dem Fluid, dessen Massenstrom bestimmt werden soll, enthalten ist.

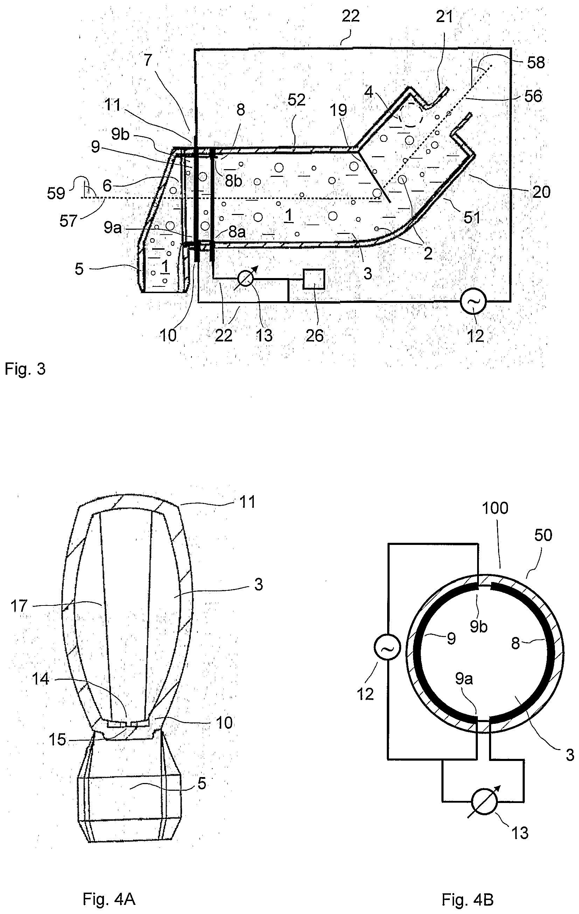

Fig. 3 zeigt eine erfindungsgemäße Vorrichtung 100 zur Messung eines Massenstromes im Längsschnitt mit dem Kanal 3, der einen Zulauf 4 (siehe Fig. 1) und einen Ablauf 5 aufweist und von einem Fluid 1, das einen Schaumanteil 2 aufweist, durchflossen wird. Der Zulauf 4 ist in einen Zyklonabscheider 20 integriert, durch den Gas oder Luft über den Bypassstutzen 21 bzw. die Entlüftungsvorrichtung 21 teilweise entfernt werden kann.

In das Gehäuse 50 fließt das Fluid im Bereich des Einlaufes tangential ein. Der Fluidstrom legt sich an das dort rund ausgebildete Gehäuseteil 51 an, das als Zyklonabscheider 20 dient. Die schwerere flüssige Phase wird nach außen gedrückt, während wenigstens ein Teil der gasförmigen Phase 2 sich in einem zentralen Bereich sammelt und über den Bypassstutzen 21 abgeführt wird. Der Bypassstutzen ist zentrisch am Ende des dort zylindrisch ausgebildeten Gehäuseteiles 51 vorgesehen und verbindet das erste Ende des Gehäuses 50, an dem der Zulauf 4 vorgesehen ist, über eine Bypassleitung mit dem zweiten Ende des Gehäuses 50, an dem der Auslauf 5 vorgesehen ist, um ein Druckgleichgewicht zwischen Zulauf 4 und Ablauf 5 herzustellen. Dadurch wird die Messvorrichtung 100 an sich druckfrei gehalten, so dass die sich einstellende Strömungsgeschwindigkeit des Fluids im Wesentlichen nicht aufgrund von Druckunterschieden bedingt wird. Erhöhte Druckunterschiede könnten ansonsten durch z.B. einen Lufteinbruch am Zitzengummi hervorgerufen werden. Insgesamt wird durch einen Bypass die Reproduzierbarkeit erhöht.

Das Gehäuse 50 umfasst einen ersten Teil 51 und einen zweiten Teil 52. Der erste Teil des Gehäuses 51 ist im Bereich des Zulaufes 4 gegenüber der Horizontalen geneigt. Hier im Ausführungsbeispiel beträgt der Winkel etwa 45° zur Horizontalen. Das zweite Gehäuseteil 52 ist ebenfalls gegenüber der Horizontalen geneigt, um die Fließbewegung zu unterstützen. Der Neigungswinkel ist aber geringer und hängt von den konkreten Bedingungen ab. In der Regel liegt der Winkel unter 30°, vorzugsweise unter 15°. Gute Ergebnisse sind mit einem Neigungswinkel von 5° erzielt worden.

Eine zentrale Achse 56 (gestrichelt eingezeichnet) durch das erste Gehäuseteil 51 bzw. den ersten Abschnitt des Gehäuses 50 ist gegenüber der vertikalen Ausrichtung um einen Winkel 58 geneigt, der hier im Ausführungsbeispiel etwa 45° beträgt. Eine zentrale Achse 57 (gestrichelt eingezeichnet) durch das zweite Gehäuseteil 52 bzw. den zweiten Abschnitt des Gehäuses 50 ist gegenüber der vertikalen Ausrichtung um einen Winkel 59 geneigt. Beide Gehäuseteile sind hier nahezu rotationssymmetrisch zu den jeweiligen zentralen Achsen 56 bzw. 57 ausgebildet. Insbesondere durch den runden Querschnitt des zweiten Abschnitts 52 vor dem Sensor mit der ersten und der zweiten Elektrode, wird in dem wichtigen Messbereich ein Untermischen von Schaum in das strömende Fluid erreicht, so dass vorhandener Schaum oder entstehender Schaum abtransportiert wird und sich nicht ansammelt.

Insbesondere durch die Neigung des ersten Gehäuseteils 51 wird eine schraubenförmige Strömung des Fluids im Gehäuse 50 verursacht. Das einströmende Fluid wird radial eingeleitet und erhält durch die Schwerkraft bedingt noch eine zusätzliche axiale Komponente.

Ein Wehr bzw. eine Trennwand 19 ist hier im Ausführungsbeispiel im Gehäuse 50 vorgesehen, welches hier zwischen erstem Gehäuseteil 51 und zweitem Gehäuseteil 52 vorgesehen ist und sich von der Decke aus schräg nach hinten und unten erstreckt. Die Trennwand 19 verschließt die Vorrichtung im oberen Bereich, so dass nur unterhalb Fluid von dem ersten Gehäuseteil 51 zu dem zweitem Gehäuseteil 52 fließen kann. Die Trennwand 19 dient zum zusätzlichen Abbau der Strömungsgeschwindigkeit und zum besseren Einmischen des Schaums, da der auf der Flüssigkeit liegende Schaum nur eingemischt durch den freien Querschnitt unterhalb des Wehrs gelangen kann, da der freie Querschnitt meistens unterhalb des Flüssigkeitsspiegels liegt. In anderen Ausgestaltungen kann keine Trennwand 19 vorgesehen sein.

Insgesamt setzt sich die schraubenförmige Bewegung des Fluids im gesamten Gehäuse 50 fort, so dass auch im zweiten im wesentlichen ebenfalls zylindrisch ausgebildeten Gehäuseteil 52 eine schraubenförmige Bewegung des Fluids vorliegt, wenigstens bei starken Fluidströmen.

Ein ganz erheblicher Vorteil dieser Struktur ist, dass der Schaumanteil des Fluids mitgerissen und untergemischt wird. Bei herkömmlichen Gehäuseformen und Strömungsbedingungen setzt sich der Schaum oft oberhalb des fließenden flüssigen Anteils des Fluids als stehender Schaumanteil ab und sammelt sich dort an. Mit der vorliegenden Ausgestaltung wird das weitgehend vermieden. Der Schaumanteil wird wenigstens während der Hauptmelkphase bei den dort vorliegenden Milchflüssen zuverlässig abgeführt. Auch während des Melkbeginns und des Melkendes wird der Schaumanteil in der Regel zuverlässig abgeführt. Da das eingesetzte Messprinzip den Schaumanteil prinzipbedingt mit berücksichtigt, wird insgesamt eine hervorragende Messgenauigkeit erzielt.

Das Fluid 1 wird vor dem Abfluss 5 in dem zweiten Gehäuseteil 52 durch einen Strömungswiderstand 6 angestaut, der hier in der Form einer Blende vorgesehen ist, und ergießt sich in den Ablauf 5.

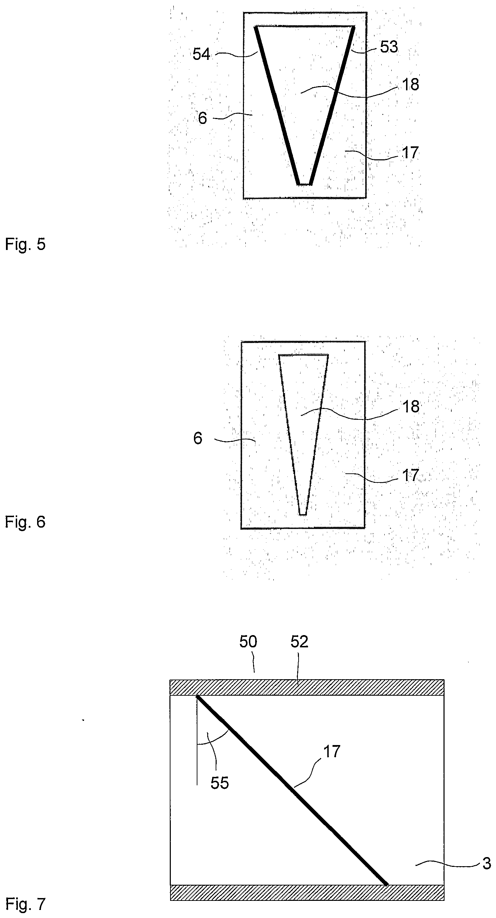

Die Messeinrichtung 7 wird durch die beiden Elektroden 8, 9 sowie das Spannungsmessmittel 13 und die Spannungsquelle 12 bzw. das Spannungserzeugungsmittel gebildet. Die Elektroden der Messeinrichtung 7 können in der Nähe des Strömungswiderstands 6 platziert werden. Insbesondere kann die Blende durch die Elektroden gebildet werden, wie in Fig. 5 dargestellt, so dass eine erste seitliche Begrenzung 53 der Blende als erste Elektrode 9 und die zweite seitliche Begrenzung 54 als zweite Elektrode 8 dienen kann.

Die erste Elektrode 9 ist in Fig. 3 als runder Stab aus leitendem Material (z. B. Edelstahl) ausgebildet, kann jedoch auch in eine Wandung des Kanals 3 integriert werden, wie es in Fig. 4B dargestellt ist.

Mit dem Spannungserzeugungsmittel 12 wird eine alternierende Spannung oder eine Wechselspannung vorgegeben, um elektrolytische Ablagerungen an den Elektroden 8, 9 zu vermeiden, die zu einer Beeinträchtigung der Spannungsmessung führen würden. Dabei werden übliche Frequenzen verwendet.

Die Dichte des durchströmenden Fluids 1 wird mit Hilfe einer ersten Elektrode 9 und einer zweiten Elektrode 8 bestimmt, in dem zwischen entfernten Punkten 9a und 9b der ersten Elektrode 9 mit Hilfe elektrischer Leitungen 22 und einem Spannungserzeugungsmittel 12 eine Spannung an die erste Elektrode 9 angelegt wird. Die Spannung kann insbesondere, wie hier im Ausfiihrungsbeispiel dargestellt, zwischen dem ersten Ende 10 und einem zweiten Ende 11 der ersten Elektrode 9 angelegt werden. Das erste Ende 10 und der erste Punkt 9a der ersten Elektrode 9 sind hier im unteren Bereich des Gehäuses vorgesehen, während der zweite Punkt 9b und das zweite Ende 11 im oberen Bereich des Gehäuses angeordnet sind.

Der Widerstand der Elektrode 9 ist so gewählt, dass er erheblich kleiner ist als der des zu messenden Fluids bei maximaler Füllhöhe. Dadurch kann der Einfluss des Fluidwiderstandes auf den Gesamtwiderstand in erster Näherung vernachlässigt werden. Eine rechnerische Berücksichtigung des Einflusses ist aber auch möglich.

Das angelegte Potential hängt vom Einzelfall ab. Hier im Ausfiihrungsbeispiel beträgt der Spitzenwert der alternierenden Spannung 60 mV, während der Widerstand der Elektrode 9 etwa 100 Milliohm beträgt.

Das Potential nimmt in der ersten Elektrode linear mit der Höhe zu. An jeder mit Fluid benetzten Stelle wird das jeweils anliegende Potential in das Fluid eingebracht. Durch die geringe absolute Höhe des Potentials werden negative Auswirkungen auf die zu melkenden Tiere vermieden.

Die zweite Elektrode 8 erstreckt sich von einem ersten Punkt 8a bzw. von einem ersten Ende im unteren Bereich des Gehäuses bis zu einem zweitem Punkt 8b bzw. einem zweiten Ende im oberen Bereich des Gehäuses und nimmt ein Potential an, welches von dem Füllstand des Fluids 1 und der Zusammensetzung des Fluids abhängt. Mit dem Spannungsmessmittel 13 ist der Punkt 8a der zweiten Elektrode 8 und der Punkt 9a der ersten Elektrode 9 bzw. das untere Ende 10 der ersten Elektrode 9 verbunden. Liegt nur reine flüssige Phase vor, dann wird an der zweiten Elektrode 8 entsprechend der Höhe des fließenden Fluids ein entsprechendes Potential angelegt, das mit dem Spannungsmessmittel 13 gemessen wird. Der Schaumanteil 2 wird berücksichtigt, da der spezifische Widerstand des Schaums entsprechend größer als der der flüssigen Phase ist. Die Widerstandsanteile von flüssiger Phase und Schaumphase bilden insgesamt einen Gesamtwiderstand, der repräsentativ für die Dichte ist.

Fig. 3 zeigt einen Querschnitt durch eine erfindungsgemäße Vorrichtung 100 mit einer als runden Stab ausgebildeten ersten Elektrode 9 und einer ebenso als runden Stab ausgebildeten zweiten Elektrode 8. Die beiden Elektroden 8 und 9 ragen in eine Vertiefung 14 hinein, in der sich auch bei geringsten Massenströmen Fluid sammelt, so dass eine elektrische Verbindung zwischen der ersten Elektrode 9 und der zweiten Elektrode 8 über die flüssige Phase hergestellt wird. Eine elektrische Kontaktierung über die flüssige Phase ist bei Melkbeginn und insbesondere gegen Melkende bei geringen oder geringsten Milchflüssen wichtig. Wenn keine flüssige Phase mehr vorhanden ist und nur noch Schaum vorhanden ist, könnten ansonsten Fehlmessungen auftreten.

Durch eine mit flüssiger Phase gefüllte Senke wird sichergestellt, dass auch bei Massenströmen, die nahezu nur eine reine Schaumphase umfassen, ein richtiges Messergebnis erzielt wird.

Es ist in einfacheren Ausfiihrungsformen auch möglich, dass anstatt einer Senke ein kleiner Widerstand parallel geschaltet wird, der eine "Senke" simuliert. Auch damit kann ein zufriedenstellendes Ergebnis erzielt werden, allerdings kann bei kleinen Flüssen mit nahezu reinem Schaumanteil noch ein Einfluss des Leitwerts der Flüssigkeit auf das Messergebnis vorliegen.

Durch diese Maßnahme ist eine Messung des Potentials selbst bei geringsten Massenströmen möglicht. Die Vertiefung 14 weist einen Abfluss 15 auf, durch welchen Fluid 1 ständig abfließen kann, so dass das in der Vertiefung 14 befindliche Fluid 1 kontinuierlich ausgetauscht wird.

Etwaige zeitliche Schwankungen der Leitfähigkeit des Fluids 1 werden somit auch in der Vertiefung 14 registriert und führen somit nicht zu Ungenauigkeiten bei der Messung. Durch die Vertiefung 14 wird ein gewisses minimales Flüssigkeitsniveau gebildet, so dass bei der potentiometrischen Messung nicht der Füllstand des Schaums, sondern die durchschnittliche Dichte des Fluids 1 bestimmt wird.

Fig. 5 und 6 zeigen unterschiedliche Ausgestaltungen des Strömungswiderstandes 6 als Blende 17 mit unterschiedlichen sich konisch verjüngenden bzw. trapezförmigen Öffnungsquerschnitten 18. Die Öffnungsquerschnitte 18 können auf die jeweilige Messung angepasst werden mit dem Vorteil, dass auch bei kleinen Massenströmen Änderungen des Flüssigkeitsstandes gut messbar sind.

In einer speziellen Ausgestaltung der Vorrichtung ist eine Blende 17 vorgesehen, wie sie z.B. in Fig. 5 dargestellt ist. Dabei können die beiden Elektroden 8, 9 die Begrenzungen der Blende 17 darstellen, indem der eine Rand 53 die erste Elektrode 9 und der zweite Rand 54 die zweite Elektrode 8 bildet. Eine solche Ausgestaltung wurde zunächst als ungünstig angesehen, da eine ungleichmäßige Einbringung des Potentials mit der ersten Elektrode 9 und ein ungleichmäßiger Abgriff des Potentials mit der zweiten Elektrode 8 erwartet wurde, da der Abstand der Elektroden über der Höhe stark variiert. Überraschenderweise hat sich dennoch herausgestellt, dass diese Ausgestaltung zu hochqualitativen Messergebnissen führt, obwohl die beiden Elektroden nicht parallel zueinander angeordnet sind. Die V-Form bzw. die trapezförmige Gestalt der Elektroden behindert die Messung nicht. Im Gegenteil wird bei dieser Ausgestaltung eine besonders zuverlässige Messung erzielt. Das liegt unter anderem daran, dass die gesamte strömende Fluidmenge durch die Blende fließt und zwischen den beiden Elektroden die Dichte bestimmt wird.

In Fig. 7 ist eine modifizierte Ausführungsform des Strömungswiderstandes in einer Seitenansicht dargestellt. In dieser Ausgestaltung ist der Strömungswiderstand zur Senkrechten geneigt angeordnet. Der Winkel zur Senkrechten beträgt hier etwa 45°, kann aber auch zwischen 0° und 60° liegen oder noch größer sein.

Bei dieser Ausfiihrungsform können die Ränder der Blende 17 auch wieder durch eine oder beide Elektroden gebildet werden. Die Blende 17 hat wiederum einen Trapezquerschnitt 18, wie er in den Fig. 5 und 6 abgebildet ist. Die Blende ist in Richtung der Strömung geneigt. Dadurch werden Fremdpartikel in dem strömenden Fluid, die sich sonst in einem unteren Bereich der Blende festsetzen könnten, entlang der Blende hochgespült bis der Querschnitt der Blende ausreicht, um die Fremdpartikel mitzureißen und wegzuspülen. Ein Verstopfen der Blende tritt deshalb in der Regel nicht auf.

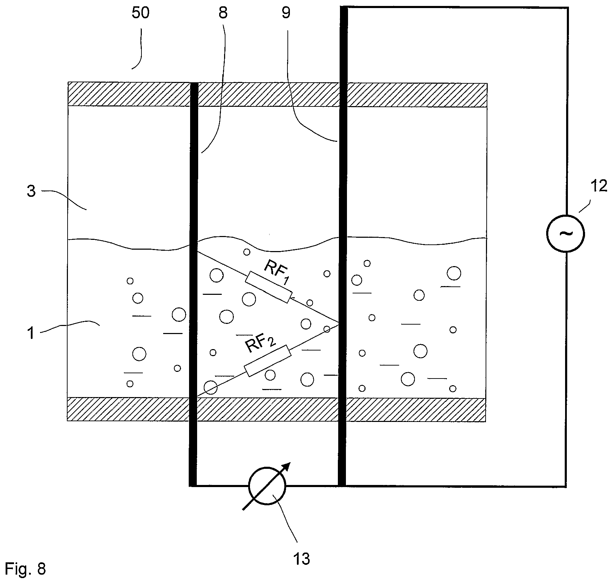

In Figur 8 ist in einem Querschnitt ein Ersatzschaubild des Messprinzips eingezeichnet. Die erste Elektrode 9 besteht aus einem niederohmigen Edelstahlstab, welcher in das leitfähige Flüssigkeits-Gasgemisch eintaucht. Das Spannungserzeugungsmittel 12 treibt über die Zuleitungen 22 einen höherfrequenten Strom durch die erste Elektrode 9. Zwischen der ersten Elektrode 9 und der zweiten Elektrode 8 wird mit dem Spannungsmessmittel 13 eine Spannung gemessen.

Zum eingetauchten Teil der ersten Elektrode 9 liegen die mittleren Ersatzwiderstände RF1 und RF2 des Flüssigkeits-Gasgemisches parallel. Somit ist die abgenommene Spannung proportional zum Dichteverlauf an der ersten Elektrode 9. Durch gesteuerte Stromspeisung wird der direkte Einfluss von den mittleren Ersatzwiderständen RF1 und RF2 auf das Messergebnis minimiert.

### Bezugszeichenliste:

- 1: Fluid
- 2: Schaum
- 3: Kanal
- 4: Zulauf
- 5: Ablauf
- 6: Strömungswiderstand
- 7: Messeinrichtung
- 8: zweite Elektrode
- 8a: erster Punkt
- 8b: zweiter Punkt
- 9: erste Elektrode
- 9a: erster Punkt
- 9b: zweiter Punkt
- 10: erstes Ende
- 11: zweites Ende
- 12: Spannungserzeugungsmittel
- 13: Spannungsmessmittel
- 14: Vertiefung
- 15: Abfluss
- 17: Blende
- 18: Öffnungsquerschnitt
- 19: Trennwand
- 20: Zyklonabscheider
- 21: Entlüftungsvorrichtung
- 22: elektrische Leitungen
- 26: Auswerteeinrichtung
- 50: Gehäuse
- 51: erstes Gehäuseteil
- 52: zweites Gehäuseteil
- 53: seitliche Begrenzung der Blende
- 54: seitliche Begrenzung der Blende
- 55: Winkel
- 56: Achse
- 57: Achse
- 58: Winkel
- 59: Winkel
- 100: Vorrichtung

## Patentansprüche

1. Vorrichtung (100) zum Messen des Massenstromes einer schäumenden und/oder einer Schaum produzierenden Flüssigkeit, umfassend
ein Gehäuse (50) mit wenigstens einem Einlass (4) und wenigstens einem Auslass (5), wobei in dem Gehäuse eine Messtrecke (3) vorgesehen ist,
und wobei die Vorrichtung weiter wenigstens eine Messeinrichtung (7) umfasst, welche an der Messstrecke angeordnet ist,
wobei die Messeinrichtung (7) wenigstens zwei von einander beabstandete Elektroden (8, 9) in Form einer ersten und einer zweiten Elektrode (9, 8) und eine Auswerteeinrichtung (26) umfasst, **dadurch gekennzeichnet,**
**dass** die Vorrichtung ein elektrisches Mittel (12) zum Anlegen einer elektrischen Größe an die erste Elektrode (9) und ein Mittel zum Aufnehmen eines elektrischen Signals (13) zwischen der ersten Elektrode (9) und der zweiten Elektrode (8) umfasst,
und **dass** die erste Elektrode (9) länglich ausgebildet ist und so angeordnet ist, dass sie in die Flüssigkeit eintaucht und die Höhe der fließenden Flüssigkeit erfasst wobei die erste Elektrode (9) beim Messen bis zu einer gewissen Höhe mit der Flüssigkeit benetzt ist und die Benetzung sowohl mit der flüssigen Phase als auch mit der eventuell vorhanden Schaumphase erfolgt, und dass das elektrische Mittel (12) mit zwei voneinander entfernten Punkten (9a, 9b) der ersten Elektrode (9) verbunden ist, so dass es parallel zur ersten Elektrode (9) geschaltet ist und ein Potential anlegbar ist, welches über die Länge der Elektrode abfällt,
und **dass** die zweite Elektrode (8) über das Mittel zum Aufnehmen des elektrischen Signals (13) mit der ersten Elektrode (9) derart elektrisch verbunden ist, dass zur Ableitung des Massenstroms zwischen der ersten Elektrode (9) und der zweiten Elektrode (8) ein Potential gemessen wird.

2. Vorrichtung nach Anspruch 1, **dadurch gekennzeichnet, dass** zwischen den beiden Elektroden durch die durchströmende Flüssigkeit ein elektrischer Widerstand gebildet wird.

3. Vorrichtung nach einem der vorhergehenden Ansprüche, **dadurch gekennzeichnet, dass** der Eigenwiderstand der Elektroden erheblich geringer ist als der der flüssigen Phase des zu messenden Fluids.

4. Vorrichtung nach einem der vorhergehenden Ansprüche, **dadurch gekennzeichnet, dass** die Gestaltung und Anordnung der beiden Elektroden (8, 9) derart ist, dass im Betrieb die flüssige Phase des Fluids in einem untersten Bereich von beiden Elektroden (8, 9) kontaktierbar ist und dass die Ausmaße der Messstrecke derart sind, dass die oberen Enden der Elektroden (8, 9) nur bei maximalstem Fluss kontaktiert werden.

5. Vorrichtung nach einem der vorhergehenden Ansprüche, **dadurch gekennzeichnet, dass** das elektrische Mittel (12) eine Spannungsquelle ist oder dass das elektrische Mittel (12) eine Stromquelle, insbesondere eine Konstantstromquelle ist.

6. Vorrichtung nach einem der vorhergehenden Ansprüche, **dadurch gekennzeichnet, dass** sich wenigstens eine, vorzugsweise beide Elektroden (8, 9) über die gesamte Höhe der Messstrecke erstrecken.

7. Vorrichtung nach einem der vorhergehenden Ansprüche, **dadurch gekennzeichnet, dass** beide Elektroden (8, 9) sich in eine Senke (14) im Bodenbereich hinein erstrecken.

8. Vorrichtung nach dem vorhergehenden Anspruch, **dadurch gekennzeichnet,**
**dass** die Senke (14) einen Abfluss (15) aufweist.

9. Vorrichtung nach einem der vorhergehenden Ansprüche, wobei mindestens eine der Elektroden (8, 9) durch einen elektrisch leitenden Stab ausgebildet wird, der insbesondere rund, oval, drei-, vier und mehreckig, flach oder abgerundet ausgebildet ist.

10. Vorrichtung nach einem der vorhergehenden Ansprüche, **dadurch gekennzeichnet, dass** eine Querschnittsverengung, vorzugsweise eine Blende (17) vorgesehen ist.

11. Vorrichtung nach dem vorhergehenden Anspruch, **dadurch gekennzeichnet, dass** die Querschnittsverengung und/oder die Blende (17) austauschbar oder veränderbar ist.

12. Vorrichtung nach einem der vorhergehenden Ansprüche, **dadurch gekennzeichnet, dass** wenigstens eine Elektrode (8, 9) an einem Gehäuseteil (50) angeordnet ist.

13. Vorrichtung nach einem der Ansprüche 10 bis 12, **dadurch gekennzeichnet, dass** eine Schlitzbreite (18) der Querschnittsverengung und/oder Blende durch wenigstens eine Elektrode (8, 9) beeinflusst wird.

14. Vorrichtung nach einem der Ansprüche 10 bis 13, **dadurch gekennzeichnet, dass** wenigstens eine Elektrode (8, 9) stromaufwärts der Querschnittsverengung (17) angeordnet ist.

15. Vorrichtung nach einem der vorhergehenden Ansprüche, **dadurch gekennzeichnet, dass** ein Bypass (21) zwischen Einlass (4) und Auslass (5) vorgesehen ist, um einen Druck über der Messstrecke zu stabilisieren.

16. Vorrichtung nach einem der vorhergehenden Ansprüche, **dadurch gekennzeichnet, dass** wenigstens eine dritte Elektrode vorgesehen ist.

17. Vorrichtung nach dem vorhergehenden Anspruch, **dadurch gekennzeichnet, dass** die dritte Elektrode von oben in die Messstrecke hineinragt.

18. Vorrichtung nach einem der vorhergehenden Ansprüche, **dadurch gekennzeichnet, dass** wenigstens ein Neigungssensor zur Bestimmung wenigstens eines Neigungswinkels vorgesehen ist.

19. Vorrichtung nach einem der vorhergehenden Ansprüche, **dadurch gekennzeichnet, dass** in einer Speichereinrichtung wenigstens ein Korrekturwert zur Berücksichtigung des wenigstens einen Neigungswinkels vorgesehen ist.

20. Vorrichtung nach dem vorhergehenden Anspruch, **dadurch gekennzeichnet, dass** ein Messbehälter zum Auffangen des Fluids vorgesehen ist.

21. Vorrichtung nach Anspruch 19 oder 20, **dadurch gekennzeichnet, dass** in dem Messbehälter wenigstens die erste und wenigstens die zweite Elektrode angeordnet sind.

22. Vorrichtung nach einem der Ansprüche 19 bis 21, **dadurch gekennzeichnet, dass** die Fluidmenge in dem Messbehälter mit der Auswerteinrichtung bestimmt wird.

23. Vorrichtung nach dem vorhergehenden Anspruch, **dadurch gekennzeichnet, dass** die Auswerteinrichtung durch Differenzbildung der Fluidmenge zu einem zweiten Zeitpunkt und einem ersten Zeitpunkt bezogen auf die Zeitspanne zwischen erstem und zweitem Zeitpunkt ein Massenstrom bestimmt wird.

24. Anordnung umfassend wenigstens zwei Vorrichtungen nach mindestens einem der vorherigen Ansprüche.

25. Anordnung zum Messen von wenigstens zwei Massenströmen insbesondere schäumender Flüssigkeit mit wenigstens zwei Vorrichtungen nach wenigstens einem der Ansprüche 1 bis 23 mit wenigstens einem elektrischen Mittel (12) zum Anlegen einer elektrischen Größe,
**dadurch gekennzeichnet,**
**dass** das elektrische Mittel (12) alternierend parallel zu der ersten Elektrode (9) der ersten Vorrichtung und parallel zu der ersten Elektrode (9) der zweiten Vorrichtung schaltbar ist.

26. Anordnung zum Messen von wenigstens zwei Massenströmen insbesondere schäumender Flüssigkeit mit wenigstens zwei Vorrichtungen nach wenigstens einem der Ansprüche 1 bis 23 mit wenigstens einem elektrischen Mittel (12) zum Anlegen einer elektrischen Größe,
**dadurch gekennzeichnet,**
**dass** die Mittel zum Aufnehmen eines elektrischen Signals (13) alternierend zwischen die erste (9) und die zweite Elektrode (8) einer Vorrichtung (100) und zwischen die erste (9) und die zweite Elektrode (8) einer anderen Vorrichtung (100) schaltbar ist.

27. Anordnung nach Anspruch 25 und 26, **dadurch gekennzeichnet, dass** für wenigstens zwei Vorrichtungen (100) genau ein elektrisches Mittel (12) und genau eine Auswerteeinrichtung (13) vorgesehen ist.

28. Anordnung nach mindestens einem der Ansprüche 24 bis 27, **dadurch gekennzeichnet, dass** wenigstens zwei Vorrichtungen (100) parallel vorgesehen sind.

29. Anordnung nach dem vorhergehenden Anspruch, **dadurch gekennzeichnet, dass** für eine zitzenindividuelle Messung eine entsprechende Anzahl an Vorrichtungen (100) vorgesehen ist.

30. Anordnung nach mindestens einem der Ansprüche 24 bis 29, **dadurch gekennzeichnet, dass** eine erste Vorrichtung (100) einen kleineren Strömungsquerschnitt als eine zweite Vorrichtung (100) aufweist.

31. Verfahren zum Messen der Menge oder des Massenstromes einer insbesondere schäumenden Flüssigkeit mit einer Vorrichtung nach einem der Ansprüche 1 bis 23, wobei die erste Elektrode (9) bis zu einer gewissen Höhe mit der schäumenden Flüssigkeit benetzt ist, wobei die Benetzung sowohl mit der flüssigen Phase als auch mit der eventuell vorhanden Schaumphase erfolgt und wobei die elektrische Größe an die erste Elektrode (9) angelegt wird, sodass in die Flüssigkeit ein Potentialverlauf eingebracht wird, der von der Höhe und der Art der Benetzung abhängt und wobei ein Potential zwischen der ersten Elektrode (9) und der zweite Elektrode (8) gemessen wird und der Massenstrom daraus abgeleitet wird.

## Claims

1. Apparatus (100) for measuring the mass flow of a foaming and/or foam producing liquid, comprising a housing (50) having at least one inlet (4) and at least one outlet (5), wherein a measuring section (3) is provided in the housing,
and wherein the apparatus further comprises at least one measuring device (7), which is disposed in the measuring section,
wherein the measuring device (7) comprises at least two electrodes (8, 9) spaced apart from one another, in the shape of a first and a second electrode (9, 8), and an evaluation unit (26), **characterized in**
**that** the apparatus comprises an electric means (12) for applying an electric magnitude to the first electrode (9) and a means for picking up an electric signal (13) between the first electrode (9) and the second electrode (8),
and **that** the first electrode (9) is configured elongated and is disposed such that it immerses in the liquid and captures the height level of the flowing liquid, wherein during measuring the first electrode (9) is wetted with the liquid up to a specific height level and wetting takes place both with the liquid phase and with any foam phase that may be present, and that the electric means (12) is connected with two points (9a, 9b) of the first electrode (9) remote from one another, so that it is connected in parallel with the first electrode (9) and a potential can be applied, which drops over the length of the electrode,
and **that** the second electrode (8) is electrically connected with the first electrode (9) via the means for picking up the electric signal (13), such that a potential is measured for deriving the mass flow between the first electrode (9) and the second electrode (8).

2. The apparatus according to claim 1, **characterized in that** an electric resistance builds up between the two electrodes by way of the liquid flowing through.

3. The apparatus according to any of the preceding claims, **characterized in that** the internal resistance of the electrodes is considerably weaker than that of the liquid phase of the measured fluid.

4. The apparatus according to any of the preceding claims, **characterized in that** the design and configuration of the two electrodes (8, 9) is such that in operation, the liquid phase of the fluid can be contacted by both of the electrodes (8, 9) in a bottommost region, and that the dimensions of the measuring section are such that the top ends of the electrodes (8, 9) are only contacted in the highest maximum flow.

5. The apparatus according to any of the preceding claims, **characterized in that** the electric means (12) is a voltage source or that the electric means (12) is a power source, in particular a constant power source.

6. The apparatus according to any of the preceding claims, **characterized in that** at least one, preferably both of the electrodes (8, 9) extend over the entire height of the measuring section.

7. The apparatus according to any of the preceding claims, **characterized in that** both of the electrodes (8, 9) extend into a hollow (14) in the bottom area.

8. The apparatus according to the preceding claim, **characterized in that** the hollow (14) comprises a drain (15).

9. The apparatus according to any of the preceding claims, wherein at least one of the electrodes (8, 9) is formed by an electrically conductive rod, which is in particular configured round, oval, triangular, quadrangular, and multiangular, flat, or rounded.

10. The apparatus according to any of the preceding claims, **characterized in that** a cross-section restriction, preferably a valve gate (17), is provided.

11. The apparatus according to the preceding claim, **characterized in that** the cross-section restriction and/or the valve gate (17) is/are exchangeable or variable.

12. The apparatus according to any of the preceding claims, **characterized in that** at least one electrode (8, 9) is positioned on a housing portion (50).

13. The apparatus according to any of claims 10 to 12, **characterized in that** the slot width (18) of the cross-section restriction and/or valve gate is influenced by at least one electrode (8, 9).

14. The apparatus according to any of claims 10 to 13, **characterized in that** at least one electrode (8, 9) is positioned upstream of the cross-section restriction (17).

15. The apparatus according to any of the preceding claims, **characterized in that** a bypass (21) is provided between inlet (4) and outlet (5) to stabilize the pressure over the measuring section.

16. The apparatus according to any of the preceding claims, **characterized in that** at least a third electrode is provided.

17. The apparatus according to the preceding claim, **characterized in that** the third electrode extends into the measuring section from above.

18. The apparatus according to any of the preceding claims, **characterized in that** at least one inclination sensor for determining at least one inclination angle is provided.

19. The apparatus according to any of the preceding claims, **characterized in that** at least one correction value is provided in a memory means to take into account the at least one inclination angle.

20. The apparatus according to the preceding claim, **characterized in that** a measuring vessel is provided for collecting the fluid.

21. The apparatus according to claim 19 or 20, **characterized in that** at least the first and at least the second electrode are positioned in the measuring vessel.

22. The apparatus according to any of the claims 19 to 21, **characterized in that** the quantity of fluid in the measuring vessel is determined by means of the evaluation unit.

23. The apparatus according to the preceding claim, **characterized in that** the evaluation unit determines a mass flow by way of establishing the difference of the fluid quantity at a second point in time and a first point in time relative to the time interval between the first and the second points in time.

24. A configuration comprising at least two apparatuses according to at least one of the preceding claims.

25. A configuration for measuring at least two mass flows in particular of a foaming liquid, comprising at least two apparatuses according to at least one of the claims 1 to 23 with at least one electric means (12) for applying an electric magnitude,
**characterized in**
**that** the electric means (12) can be connected alternatingly, parallel to the first electrode (9) of the first apparatus, and parallel to the first electrode (9) of the second device.

26. A configuration for measuring at least two mass flows in particular of a foaming liquid, comprising at least two apparatuses according to at least one of the claims 1 to 23 with at least one electric means (12) for applying an electric magnitude,
**characterized in**
**that** the means for picking up an electric signal (13) can be connected alternatingly, between the first (9) and the second electrodes (8) of an apparatus (100), and between the first (9) and the second electrodes (8) of another apparatus (100).

27. The configuration according to claims 25 and 26, **characterized in that** exactly one electric means (12) and exactly one evaluation unit (13) is provided for at least two apparatuses (100).

28. The configuration according to at least one of the claims 24 to 27, **characterized in that** at least two apparatuses (100) are provided in parallel.

29. The configuration according to the preceding claim, **characterized in that** for teat-individual measuring a corresponding number of apparatuses (100) is provided.

30. The configuration according to at least one of the claims 24 to 29, **characterized in that** a first apparatus (100) comprises a smaller flow cross-section than does a second apparatus (100).

31. Method for measuring the quantity, or the mass flow, in particular of a foaming liquid by means of an apparatus according to any of the claims 1 to 23, wherein the first electrode (9) is wetted with the foaming liquid up to a specific height level, wherein wetting takes place both with the liquid phase and with any foam phase that may be present, and wherein the electric magnitude is applied to the first electrode (9), so that a potential curve is introduced into the liquid, which is dependent on the height level and the type of wetting, and wherein a potential between the first electrode (9) and the second electrode (8) is measured and the mass flow is derived therefrom.

## Revendications

1. Dispositif (100) de mesure du débit massique d'un liquide moussant et/ou produisant de la mousse, comprenant
un boîtier (50) doté d'au moins une admission (4) et au moins une évacuation (5), une veine de mesures (3) étant prévue dans le boîtier,
et le dispositif comprenant en outre au moins un appareil de mesure (7) qui est agencé sur la veine de mesures,
l'appareil de mesure (7) comprenant au moins deux électrodes (8, 9) espacées l'une de l'autre, sous la forme d'une première et d'une deuxième électrode (9, 8), et un appareil d'évaluation (26),
**caractérisé en ce**
**que** le dispositif comprend un moyen électrique (12) destiné à appliquer une grandeur électrique à la première électrode (9), et un moyen pour enregistrer un signal électrique (13) entre la première électrode (9) et la deuxième électrode (8),
et **que** la première électrode (9) est constituée sous forme oblongue et est agencée de sorte qu'elle plonge dans le liquide et qu'elle détecte la hauteur du liquide en mouvement, la première électrode (9) étant mouillée de liquide jusqu'à une certaine hauteur lors de la mesure, et le mouillage s'effectuant aussi bien en phase liquide qu'en phase de mousse éventuellement présente, et que le moyen électrique (12) est connecté à deux points (9a, 9b) de la première électrode (9), éloignés l'un de l'autre, de sorte qu'il est monté en parallèle par rapport à la première électrode (9) et qu'un potentiel peut être appliqué, lequel retombe sur la longueur de l'électrode,
et **que** la deuxième électrode (8) est, par le moyen destiné à enregistrer le signal électrique (13), connectée électriquement à la première électrode (9) de sorte que, pour dériver le débit massique, un potentiel est mesuré entre la première électrode (9) et la deuxième électrode (8).

2. Dispositif selon la revendication 1, **caractérisé en ce qu'**une résistance électrique est formée entre les deux électrodes par le liquide coulant entre elles.

3. Dispositif selon l'une quelconque des revendications précédentes, **caractérisé en ce que** la résistance propre des électrodes est nettement inférieure à celle de la phase liquide du fluide à mesurer.

4. Dispositif selon l'une quelconque des revendications précédentes, **caractérisé en ce que** le design et l'agencement des deux électrodes (8, 9) sont tels qu'en fonctionnement, la phase liquide du fluide peut être mise en contact dans une zone la plus basse des deux électrodes (8, 9), et que les dimensions de la veine de mesures sont telles que les extrémités supérieures des électrodes (8, 9) ne sont mises en contact que lorsque le flux est à son maximum.

5. Dispositif selon l'une quelconque des revendications précédentes, **caractérisé en ce que** le moyen électrique (12) est une source de tension ou que le moyen électrique (12) est une source de courant, notamment une source de courant continu.

6. Dispositif selon l'une quelconque des revendications précédentes, **caractérisé en ce qu'**au moins une, de préférence les deux électrodes (8, 9) s'étendent sur toute la hauteur de la veine de mesures.

7. Dispositif selon l'une quelconque des revendications précédentes, **caractérisé en ce que** les deux électrodes (8, 9) s'étendent jusque dans une dépression (14) dans le fond.

8. Dispositif selon la revendication précédente, **caractérisé en ce que** la dépression (14) présente un écoulement (15).

9. Dispositif selon l'une quelconque des revendications précédentes, au moins une des électrodes (8, 9) étant constituée par une barre électroconductrice qui est réalisée notamment ronde, ovale, triangulaire, carrée ou pluri angulaire, plate ou aplatie.

10. Dispositif selon l'une quelconque des revendications précédentes, **caractérisé en ce qu'**est prévu un rajeunissement de section droite, de préférence une chicane (17).

11. Dispositif selon la revendication précédente, **caractérisé en ce que** le rajeunissement de section droite et/ou la chicane (17) sont interchangeables ou modifiables.

12. Dispositif selon l'une quelconque des revendications précédentes, **caractérisé en ce qu'**au moins une électrode (8, 9) est agencée sur une partie de boîtier (50).

13. Dispositif selon l'une quelconque des revendications 10 à 12, **caractérisé en ce qu'**au moins une électrode (8, 9) influence une largeur de fente (18) du rajeunissement de section droite et/ou chicane.

14. Dispositif selon l'une quelconque des revendications 10 à 13, **caractérisé en ce qu'**au moins une électrode (8, 9) est agencée en amont du rajeunissement de section droite (17).

15. Dispositif selon l'une quelconque des revendications précédentes, **caractérisé en ce qu'**une dérivation (21) est prévue entre l'admission (4) et l'évacuation (5) afin de stabiliser une pression par le biais de la veine de mesures.

16. Dispositif selon l'une quelconque des revendications précédentes, **caractérisé en ce qu'**au moins une troisième électrode est prévue.

17. Dispositif selon la revendication précédente, **caractérisé en ce que** la troisième électrode s'étend du haut jusque dans la veine de mesures.

18. Dispositif selon l'une quelconque des revendications précédentes, **caractérisé en ce qu'**au moins un capteur d'inclinaison est prévu pour déterminer au moins un angle d'inclinaison.

19. Dispositif selon l'une quelconque des revendications précédentes, **caractérisé en ce qu'**une valeur de correction est prévue dans un appareil d'enregistrement pour tenir compte de l'au moins un angle d'inclinaison.

20. Dispositif selon la revendication précédente, **caractérisé en ce qu'**un réceptacle de mesure est prévu pour récupérer le fluide.

21. Dispositif selon la revendication 19 ou 20, **caractérisé en ce qu'**au moins la première et au moins la deuxième électrode sont agencées dans le réceptacle de mesure.

22. Dispositif selon l'une quelconque des revendications 19 à 21, **caractérisé en ce que** la quantité de fluide dans le réceptacle de mesure est déterminée par l'appareil d'évaluation.

23. Dispositif selon la revendication précédente, **caractérisé en ce que** l'appareil d'évaluation détermine un débit massique par formation de différence de la quantité de fluide à un deuxième moment et à un premier moment par rapport à l'intervalle de temps entre le premier et le deuxième moment.

24. Agencement comprenant au moins deux dispositifs selon au moins l'une quelconque des revendications précédentes.

25. Agencement de mesure d'au moins deux débits massiques notamment de liquide moussant, doté d'au moins deux dispositifs selon au moins l'une quelconque des revendications 1 à 23, doté d'au moins un moyen électrique (12) destiné à appliquer une grandeur électrique, **caractérisé en ce**
**que** le moyen électrique (12) peut être, en alternance, monté en parallèle par rapport à la première électrode (9) du premier dispositif et en parallèle par rapport à la première électrode (9) du deuxième dispositif.

26. Agencement de mesure d'au moins deux débits massiques notamment de liquide moussant, doté d'au moins deux dispositifs selon au moins l'une quelconque des revendications 1 à 23, doté d'au moins un moyen électrique (12) destiné à appliquer une grandeur électrique,
**caractérisé en ce**
**que** le moyen d'enregistrement d'un signal électrique (13) peut être, en alternance, monté entre la première (9) et la deuxième électrode (8) d'un dispositif (100) et entre la première (9) et la deuxième électrode (8) d'un autre dispositif (100).

27. Agencement selon la revendication 25 et 26, **caractérisé en ce que** pour au moins deux dispositifs (100), sont prévus exactement un moyen électrique (12) et exactement un appareil d'évaluation (13).

28. Agencement selon l'une quelconque des revendications 24 à 27, **caractérisé en ce qu'**au moins deux dispositifs (100) sont prévus en parallèle.

29. Agencement selon la revendication précédente, **caractérisé en ce que** pour une mesure individualisée d'un trayon, un nombre correspondant de dispositifs (100) est prévu.

30. Dispositif selon au moins l'une quelconque des revendications 24 à 29, **caractérisé en ce qu'**un premier dispositif (100) présente une section d'écoulement inférieure à un deuxième dispositif (100).

31. Procédé de mesure de la quantité ou du débit massique notamment d'un liquide moussant, doté d'un dispositif selon l'une quelconque des revendications 1 à 23, la première électrode (9) étant mouillée du liquide moussant jusqu'à une certaine hauteur, le mouillage s'effectuant aussi bien en phase liquide qu'en phase moussante éventuellement présente, et la grandeur électrique étant appliquée à la première électrode (9), de sorte qu'une courbe de potentiel est amenée dans le liquide, laquelle dépend de la hauteur et de la nature du mouillage, et un potentiel étant mesuré entre la première électrode (9) et la deuxième électrode (8), et le débit massique en étant dérivé.
